# EUROPEAN PATENT SPECIFICATION

(11) **EP 2 414 426 B1**
(45) Date of publication and mention of the grant of the patent: **10.12.2014**
(21) Application number: 09788747.5
(22) Date of filing: 01.04.2009
(51) Int. Cl.: C08G 63/00, C08K 5/54

(54) **IMPROVED PROCESS FOR THE PRODUCTION OF POLYESTERS**
VERBESSERTES HERSTELLUNGSVERFAHREN FÜR POLYESTER
PROCÉDÉ AMÉLIORÉ POUR PRODUIRE DES POLYESTERS

(43) Date of publication of application: 08.02.2012
(73) Proprietor: Eastman Chemical Company, Kingsport, TN 37660 (US)
(72) Inventor: BARTON, Benjamin Frederick, Kingsport Tennessee 37664 (US); TREECE, Lanny Calvin, Kingsport Tennessee 37663 (US); ROBINETTE, Lisa Marie, Kingsport Tennessee 37664 (US); SHACKELFORD, Damon, Bryan, Kingsport TN 37664 (US)
(74) Representative: Wallinger, Michael
(86) International application number: PCT/US2009/002030
(87) International publication number: WO 2010/114508

(56) References cited:
- EP-A- 0 366 479
- WO-A-97/31967
- GB-A- 1 044 015
- GB-A- 1 130 558
- US-A- 3 313 777
- US-A- 5 089 598
- US-A- 6 043 322
- DATABASE WPI Week 199014 Thomson Scientific, London, GB; AN 1990-105488 XP002559659 & JP 02 058532 A (HITACHI CHEM CO LTD) 27 February 1990 (1990-02-27)
- DATABASE WPI Week 197807 Thomson Scientific, London, GB; AN 1978-12801A XP002559660 & JP 50 139896 A (TORAY IND INC) 8 November 1975 (1975-11-08)

## Description

### Field of the invention

The present invention relates to a process for making (co)polyesters of terephthalic acid or an ester thereof, wherein said acid or an ester thereof and a glycol are heated in the presence of a silicon-containing compound thereby forming the (co)polyester. Specifically, said glycol comprises 2,2,4,4-tetramethyl-1,3-cyclobutanediol. More specifically, said glycol comprises 2,2,4,4-tetramethyl-1,3-cyclobutanediol and 1,4-cyclohexanedimethanol.

### Background of the invention

Polyesters and copolyesters typically are made from a dicarboxylic acid and a diol typically in a melt phase reaction.

From US 6,313,259 it is known that the manufacture of polycarbonates from an aromatic diol compound and a carbonic acid diester may be accompanied by severe foaming phenomenon. To prevent the occurrence of foaming of the melt, the reaction is performed in the presence of a defoaming agent.

Polyesters and copolyesters of terephthalic acid may also be produced via a melt phase reaction. Herein, terephthalic or an ester thereof and a glycol monomer or glycol monomers are reacted, preferably in the presence of a suitable catalyst system. The generated water is distilled off, thereby forming the respective (co)polyester. In general, this reaction is performed in two stages. In a first stage (stage (I), terephthalic acid or an ester thereof is esterified with the glycol or the glycols. Subsequent to the esterification or ester exchange of the first stage, a polycondensation reaction is performed in a second stage (stage (II)), wherein excess monomer(s), esterification by-products and water are removed under elevated temperatures and vacuum to produce a (co)polyester of suitable molecular weight or inherent viscosity (IV) adapted to the intended end-use applications.

In the production of (co)polyesters of terephthalic acid, it has been observed that both the esterification or ester exchange and/or polycondensation stages sometimes are not easy to control, so that it may be difficult to reliably produce a (co)polyester of a suitable inherent viscosity at high raw material yield. Frequently, the required low acid number and the aspired high viscosity of the (co)polyester can only be achieved after disadvantageous prolonged polycondensation, or even can not be achieved at all.

Specifically, it has been observed that melt reactions of terephthalic acid with 2,2,4,4-tetramethyl-1,3-cyclobutanediol (TMCD) as the glycol component frequently are more difficult to control than melt reactions of terephtalic acid with ethylene glycol or butylene glycol or similar glycols, or with glycols such as 1,4-cyclohexanedimethanol (CHDM).

On the laboratory scale, the addressed problems may be overcome by vigorous stirring in order to provide a thoroughly mixed reaction mixture. However, on the industrial scale, such vigorous stirring processes are not applicable due to the rather high melt viscosity of the polycondensation stage (stage (II)). This particularly applies to continuous melt phase processes, where esterification stage (stage (I)) and polycondensation stage (stage (II)) are carried out in different vessels, and the reaction melt has to be transferred via pipes from the esterification vessel to the polycondensation vessel, frequently also via further intermediary vessels.

One object of the present invention was to at least reduce the addressed problems in the manufacturing process of (co)polyesters of terephthalic acid, in particular of TMCD-containing (co)polyesters of terephthalic acid.

### Summary of the invention

The addressed problem could be solved by a process for making a polyester comprising: heating a mixture comprising
(a) a dicarboxylic acid component comprising:
   (i) terephthalic acid residues; and
(b) a glycol component comprising:
   (ii) 2,2,4,4-tetramethyl-1,3-cyclobutanediol residues; and
   wherein said heating is performed in the presence of a silicon-containing compound.

It has been discovered that the heating of a mixture comprising a dicarboxylic acid component comprising terephthalic acid residues and a glycol component comprising 2,2,4,4-tetramethyl-1,3-cyclobutanediol residues, wherein said heating is performed in the presence of a silicon-containing compound, can mitigate or even completely eliminate the addressed process issues, thereby enabling the manufacture of (co)polyesters of high inherent viscosity and low acid number. Thus, the new process results in a high raw material yield and high production rates.

Surprisingly, it has been discovered that already low levels of said silicon-containing compound dramatically improves the manufacturing process of polyesters and copolyesters based on terephthalic acid and TMCD. In the following, the terms polyester and copolyester are used interchangeable.

It has been discovered that already about 0.1 to 100 ppm, preferably 1 to 20 ppm of a silicon-containing compound based on the total amount of the polyester is effective.

The silicon-containing compound may be added upfront directly to the reactor used in stage (I) or premixed and fed with one of the monomer or catalyst feed streams, or to any further reactor used for the manufacture of the polyester.

Accordingly, in one embodiment, the silicon-containing compound may be added to the reaction mixture used for the manufacture of the polyester at any point of time of the reaction, in one portion or in several portions.

In one aspect, the processes of making the polyesters useful in the invention can comprise a batch or a continuous process.

Advantageously, the clarity of the obtained polyesters which is a prerequisite for many applications, is not affected by the silicon-containing compound.

In another aspect, the invention also relates to a polyester comprising:
(a) a dicarboxylic acid component comprising:
   (i) terephthalic acid residues; and
(b) a glycol component as claimed; and
a silicon-containing compound.

In still another aspect, the invention relates to the use of a silicon-containing compound in the manufacture of a polyester comprising:
(a) a dicarboxylic acid component comprising:
   (i) terephthalic acid residues; and
(b) a glycol component as claimed,
for increasing the inherent viscosity of said polyester compared to an otherwise similar polyester that does not contain said silicon-containing compound.

In one embodiment, the polyester contains no polycarbonate.

### Detailed description of the invention

The present invention may be understood more readily by reference to the following detailed description of certain embodiments of the invention.

In one embodiment of the process according to the invention, terephthalic acid may be used as the starting material. In another embodiment, dimethyl terephthalate may be used as the starting material. In yet another embodiment, mixtures of terephthalic acid and dimethyl terephthalate may be used as the starting material and/or as an intermediate material.

In certain embodiments, terephthalic acid or an ester thereof, such as, for example, dimethyl terephthalate or a mixture of terephthalic acid residues and an ester thereof can make up a portion or all of the dicarboxylic acid component used to form the polyesters useful in the invention. In certain embodiments, terephthalic acid residues can make up a portion or all of the dicarboxylic acid component used to form the polyesters useful in the invention. The terms "terephthalic acid" and "dimethyl terephthalate" are used interchangeably herein. In one embodiment, dimethyl terephthalate is part or all of the dicarboxylic acid component used to make the polyesters useful in the present invention. In all embodiments, ranges of from 70 to 100 mole %; or 80 to 100 mole %; or 90 to 100 mole %; or 99 to 100 mole %; or 100 mole % terephthalic acid and/or dimethyl terephthalate and/or mixtures thereof may be used.

In addition to terephthalic acid, the dicarboxylic acid component of the polyesters useful in the invention can comprise up to 30 mole %, up to 20 mole %, up to 10 mole %, up to 5 mole%, or up to 1 mole % of one or more modifying aromatic dicarboxylic acids. Yet another embodiment contains 0 mole % modifying aromatic dicarboxylic acids. Thus, if present, it is contemplated that the amount of one or more modifying aromatic dicarboxylic acids can range from any of these preceding endpoint values including, for example, from 0.01 to 30 mole %, 0.01 to 20 mole %, from 0.01 to 10 mole %, from 0.01 to 5 mole % and from 0.01 to 1 mole %.

In one embodiment, modifying aromatic dicarboxylic acids that may be used in the present invention include but are not limited to those having up to 20 carbon atoms, and which can be linear, para-oriented, or symmetrical. Examples of modifying aromatic dicarboxylic acids which may be used in this invention include, but are not limited to, isophthalic acid, 4,4'-biphenyldicarboxylic acid, 1,4-, 1,5-, 2,6-, 2,7-naphthalenedicarboxylic acid, and trans-4,4'-stilbenedicarboxylic acid, and esters thereof.

In one embodiment, glycols useful for the polyesters according to the invention refer to diols which contain 2 to 16 carbon atoms. Examples of suitable glycols include, but are not limited to, ethylene glycol residues, 1,2-propanediol, 1,3-propanediol, neopentyl glycol, 1,4-butanediol, 1,5-pentanediol, 1,6-hexanediol, p-xylene glycol, polytetramethylene glycol, and mixtures thereof.

The process according to the invention relates to a process of making a polyester comprising terephthalic acid residues and residues of TMCD.

In another embodiment, the process according to the invention relates to a process for making a copolyester of TMCD and 1,2-cyclohexanedimethanol (CHDM).

Copolyesters made from terephthalic acid (TA) and TMCD and CHDM are known from a multitude of international patent applications such as WO 2006/127755, WO 2006/127831, WO 2006/137954, WO 2006/137961, WO 2007/001528, WO 2007/001529, WO 2007/001530, WO 2007/001531, WO 2007/001532, WO 2007/001533, WO 2007/001534, WO 2007/001535, WO 2007/001536, WO 2007/001537, WO 2007/001541, WO 2007/001542, WO 2007/001544, WO 2007/001545, WO 2007/001547, WO 2007/001548, WO 2007/001549, WO 2007/001550, WO 2007/001551, WO 2007/001553, WO 2007/001554, WO 2007/001555, WO 2007/001556, WO 2007/001559, WO 2007/001560, WO 2007/001561, WO 2007/001562, WO 2007/001563, WO 2007/001564, WO 2007/001565, WO 2007/001566, WO 2007/001567, WO 2007/001568, WO 2007/001570, WO 2007/001571, WO 2007/001572, WO 2007/001573, WO 2007/001574, WO 2007/001575, WO 2007/050118, WO 2007/001552, WO 2007/001557, WO 2007/053434, WO 2007/053460 and WO 2007/001569.

Copolyesters made from terephthalic acid (TA) and TMCD and CHDM are of considerable commercial interest. Such polyesters in general provide high impact strengths, hydrolytic stability, toughness, chemical resistance, good color and clarity, long crystallization half-times, low ductile to brittle transition temperatures, low specific gravity, and thermoformability. Thus, these esters are excellent starting materials for the manufacture of a multitude of articles, such as films and sheets, bottles, restaurant smallware, skylights, outdoor signs and other products as disclosed in the above referenced documents of the prior art.

Accordingly, in one embodiment, the present invention relates to a process for making a polyester comprising: heating a mixture comprising
(a) a dicarboxylic acid component comprising:
   (i) 70 to 100 mole % of terephthalic acid residues;
   (ii) 0 to 30 mole % of aromatic dicarboxylic residues having up to 20 carbon atoms; and
   (iii) 0 to 10 mole % of aliphatic dicarboxylic acid residues having up to 16 carbon atoms; and
(b) a glycol comprising:
   (i) 1 to 99 mole % of 2,2,4,4-tetramethyl-1,3-cyclobutanediol residues; and
   (i) 1 to 99 mole % 1,4-cyclohexanedimethanol residues;
wherein the total amount of the dicarboxylic acid component is 100 mole % and the total mole % of the glycol component is 100 %; and wherein said heating is performed in the presence of a silicon-containing compound.

Said silicon-containing compound is present in an amount of from 0.1 to 100 ppm based on the total weight of the the polyester to be made.

In another embodiment, the amount of said silicon-containing compound is from 0.1 to 50 ppm.

In still another embodiment, the amount of said silicon-containing compound is from 1 to 20 ppm.

In one aspect, the silicon-containing compounds are selected such that they are not volatile or have a low volatility under the reaction conditions of the polyester reaction, so that they do not distill off from the reaction mixture during the reaction.

Accordingly, in one embodiment, the silicon-containing compounds have a molecular weight (number average molecular weight) of more than 1,000 Da as measured by gel permeation chromatography and calculated by calibration based on polystyrene having a known molecular weight.

In one embodiment, the molecular weight ranges from 200 to 100,000 Da, molecular weight of preferably from 200 to 30,000, more preferably from 500 to 10,000, still more preferably 1,000 to 5,000 when measured by gel permeation chromatography (GPC).

In one embodiment, the silicon-containing compounds are compounds such as siloxanes and polysiloxanes.

The polysiloxane compounds used in the present invention are those compounds having in a molecule thereof, a structure represented by the general formula -(R¹SiR ²-O)ₙ- wherein R¹ and R² are independently a branched or unbranched alkyl group having usually 1 to 10 carbon atoms, preferably 1 to 4 carbon atoms, especially a methyl group, and may be the same or different from each other; and n is an integer of usually not less than 6, preferably 10 to 500, more preferably 30 to 100.

The polysiloxane compounds generally have at a molecule end thereof, usually an alkyl group, especially a methyl group, or may have a functional group such as a hydroxyl group or a derivative group derived from a hydroxyl group, e.g., an ester group, a carbonate group or ether group; a carboxyl group or a derivative group derived from carboxyl group, e.g., an ester group, amide group or urethane group; an amino group or a derivative group derived from an amino group, e.g., an amide group, urethane group or urea group; or the like. The polysiloxane compounds may also be bonded at a molecule end thereof to compounds having the above functional groups.

Suitable products are commercially available or can be produced according to known methods.

In one embodiment, the silicon-containing compound is a polydialkysiloxane such as polydimethylsiloxane.

In one embodiment, said silicon-containing compound is added to the mixture prior to the heating or during heating, or prior to the heating and during the heating.

Accordingly, said compound may be added in the esterification stage of stage (I) or to the polycondensation stage of stage (II), or in the esterification stage of stage (I) and to the polycondensation stage of stage (II) of the process for the manufacture of said polyester.

Said silicon-containing compound may be added as such or in the form of a diluted solution in an appropriate solvent.

The heating of the reaction mixture may be continued until the aspired inherent viscosity of the polyester is achieved. In one embodiment, the heating is carried out until the polyester has an inherent viscosity of from 0.35 to 1.20 dUg as determined in 60/40 (wt/wt) phenol/tetrachloroethane at a concentration of 0.25 g/50 ml at 25 °C.

In a preferred embodiment, the inherent viscosity is from 0.35 to less than 0.70 dUg.

In one embodiment, the polycondensation reaction in stage (II) is performed in a manner that the melt viscosity of the product does not exceed 10,000 Poise (1,000 Pa*s) as measured at 1 radian/second on a rotary melt rheometer at 290 °C. A viscosity of less than 10,000 Poise (1,000 Pa*s) in general still allows a good handling of the melt.

Accordingly, in one embodiment, the produced polyester has an inherent viscosity of from 0.35 to less than 0.70 dUg as determined in 60/40 (wt/wt) phenol/tetrachloroethane at a concentration of 0.25 g/50 ml at 25 °C, and a melt viscosity of less than 10,000 Poise (1,000 Pa*s) as measured at 1 radian/second on a rotary melt rheometer at 290 °C.

In one aspect, the process of the invention is carried out under the influence of a catalyst in order to accelerate the esterification reaction in stage (I) and/or the polycondensation reaction in stage (II).

In one aspect, the catalyst is selected from at least one compound of tin, titanium, gallium, zinc, antimony, cobalt, manganese, magnesium, germanium, lithium, aluminum compounds and an aluminum compound with lithium hydroxide or sodium hydroxide.

The catalyst may be added in stage (I) of the reaction, i.e. in the esterification reaction.

In one embodiment, it is believed that when at least one thermal stabilizer comprising at least one phosphorus compound is used during the processes of making the polyesters according to the present invention, the polyesters can be more easily produced without at least one of the following occurring: bubbling, splay formation, color formation, foaming, off-gassing, and erratic melt levels, i.e., pulsating of the polyester or the polyester's production and processing systems.

Accordingly, in one embodiment the mixture further comprises a phosphorus compound.

In one aspect, the invention comprises a process for making a polyester wherein said mixture comprising TA, TMCD and CHDM is heated at a temperature of from 150 °C to 250 °C, under a relative pressure of from 0 mbar (0 psig) to 5175 mbar (75 psig), wherein the molar ratio of glycol component/dicarboxylic acid component is from 1.0 to 1.5/1.0.

In one embodiment, the product that has been prepared at said temperature of from 150 °C to 250 °C subsequently is heated at a temperature of from 230 °C to 320 °C under a pressure chosen from the range of the final pressure of the preceding heating to an absolute pressure of 0.026 mbar (0.02 torr) to form a final polyester.

The term "relative pressure" defines a pressure above atmospheric pressure, and the term "absolute pressure" a pressure below atmospheric pressure.

In one embodiment, a silicon-containing compound is added, when the polyester composition is heated at a temperature of from 230 °C to 320 °C.

In another embodiment, the invention relates to a process for making a polyester comprising stages (I) and (II):
(I) heating a mixture at a temperature of from 150 °C to 250 °C, under a relative pressure of from 0 mbar (0 psig) to 5175 mbar (75 psig), wherein said mixture comprises:
   (a) a dicarboxylic acid component comprising:
      (i) 70 to 100 mole % of terephthalic acid residues;
      (ii) 0 to 30 mole % of aromatic dicarboxylic acid residues having up to 20 carbon atoms; and
      (iii) 0 to 10 mole % of aliphatic dicarboxylic acid residues having up to 16 carbon atoms; and
   (b) a glycol component comprising:
      (i) 1 to 99 mole % of 2,2,4,4-tetramethyl-1,3-cyclobutanediol residues; and
      (ii) 1 to 99 mole % of cyclohexanedimethanol residues;
      wherein the molar ratio of glycol component/dicarboxylic acid component added in stage (I) is 1.0-1.5/1.0;
      wherein the mixture in stage (I) is heated in the presence of at least one compound of tin, titanium, gallium, zinc, antimony, cobalt, manganese, magnesium, germanium, lithium, aluminum and an aluminum compound with lithium hydroxide or sodium hydroxide; and
(II) heating the product of stage (I) at a temperature of 230 °C to 320 °C under a pressure chosen from the range of the final pressure of stage (I) to an absolute pressure of 0.026 mbar (0.02 torr), to form a final polyester;
wherein the total mole % of the dicarboxylic acid component of the final polyester is 100 mole %; and wherein the total mole % of the glycol component of the final polyester is 100 mole %; wherein a phosphorus compound is added in stage (I) or stage (II); and wherein the heating is performed in the presence of a silicon-containing compound.

In one aspect of the invention, the silicon-containing compound is added in stage (I) or in stage (II) or in stage (I) and stage (II).

In one aspect, the absolute pressure used in stage (II) is from 26 mbar (20 torr) to 0.026 mbar (0.02 torr); or from 13 mbar (10 torr) to 0.026 (0.02 torr); or from 6.5 mbar (5 torr) to 0.026 mbar (0.02 torr); or from 4 mbar (3 torr) to 0.026 mbar (0.02 torr); or from 26 mbar (20 torr) to 0.13 mbar (0.1 torr); or from 13 mbar (10 torr) to 0.13 mbar (0.1 torr); or from 6.5 mbar (5 torr) to 0.13 mbar (0.1 torr); or from 4 mbar (3 torr) to 0.13 mbar (0.1 torr).

In one aspect, the molar ratio of glycol component/dicarboxylic acid component added in stage (I) is 1.0-1.5/1.0; or 1.01-1.5/1.0; or 1.01-1.3/1.0; or 1.01-1.2/1.0; or 1.01-1.15/1.0; or 1.01-1.10/1.0; or 1.03-1.5/1.0; or 1.03-1.3/1.0; or 1.03-1.2/1.0; or 1.03-1.15/1.0; or 1.03-1.10/1.0; or 1.05-1.5/1.0; or 1.05-1.3/1.0; or 1.05-1.2/1.0; or 1.05-1.15/1.0; or 1.01-1.10/1.0.

In any of the process embodiments for making the polyesters useful in the invention, the heating time of stage (II) may be from 1 to 5 hours; or from 1 to 4 hours; or from 1 to 3 hours; or from 1.5 to 3 hours; or from 1 to 2 hours.

In another aspect, the process relates to preparing copolyesters comprising terephthalic acid, 2,2,4,4-tetramethyl-1,3-cyclobutanediol, and 1,4-cyclohexanedimethanol. This process comprises the stages of:
(A) heating a mixture comprising the monomers useful in the polyesters of the invention in the presence of at least one tin catalyst and at least one phosphate ester at a temperature of 150 to 250 °C for a time sufficient to produce an initial polyester;
(B) polycondensing the product of stage (A) by heating it at a temperature of 240 to 320 °C; and
(C) removing any unreacted glycols;
wherein the heating is performed in the presence of a silicon-containing compound.

Reaction times for the esterification stage (A) are dependent upon the selected temperatures, pressures, and feed mole ratios of glycol to dicarboxylic acid.

In one embodiment, stage (A) can be carried out until 50 % by weight or more of the 2,2,4,4-tetramethyl-1,3-cyclobutanediol has been reacted. Stage (A) may be carried out under a relative pressure, ranging from 0 mbar (0 psig) to 6900 mbar (100 psig).

The term "reaction product" as used in connection with any of the catalysts useful in the invention refers to any product of a polycondensation or esterification reaction with the catalyst and any of the monomers used in making the polyester as well as the product of a polycondensation or esterification reaction between the catalyst and any other type of additive.

Typically, stage (B) and stage (C) can be conducted at the same time. These stages can be carried out by methods known in the art such as by placing the reaction mixture under a pressure ranging from a relative pressure of from 0.14 mbar (0.002 psig) to below atmospheric pressure, or by blowing hot nitrogen gas over the mixture.

In one aspect, the processes of making the polyesters useful in the invention can comprise a batch or a continuous process.

The invention relates to a polyester comprising:
(a) a dicarboxylic acid component comprising:
   (i) terephthalic acid residues; and
(b) a glycol component comprising:
   (ii) 2,2,4,4-tetramethyl-1,3-cyclobutanediol residues; and
and a silicon-containing compound.

In another embodiment, the invention relates to a polyester comprising:
(a) a dicarboxylic acid component comprising:
   (i) 70 to 100 mole % of terephthalic acid residues;
   (ii) 0 to 30 mole % of aromatic dicarboxylic residues having up to 20 carbon atoms; and
   (i) 0 to 10 mole % of aliphatic dicarboxylic acid residues having up to 16 carbon atoms; and
(b) a glycol comprising:
   (i) 1 to 99 mole % of 2,2,4,4-tetramethyl-1,3-cyclobutanediol residues; and
   (ii) 1 to 99 mole % 1,4-cyclohexanedimethanol residues;
wherein the total amount of the dicarboxylic acid component is 100 mole % and the total mole % of the glycol component is 100 %; and a silicon-containing compound.

The term "polyester" includes "copolyesters" and is understood to mean a synthetic polymer prepared by the reaction of one or more difunctional carboxylic acids and/or multifunctional carboxylic acids with one or more difunctional hydroxyl compounds as described above and/or with other multifunctional hydroxyl compounds, for example, branching agents. Typically the difunctional carboxylic acid can be a dicarboxylic acid and the difunctional hydroxyl compound can be a dihydric alcohol such as, for example, glycols and diols. The term "glycol" as used herein includes, but is not limited to, diols, glycols; and/or multifunctional hydroxyl compounds, for example, branching agents. Alternatively, the difunctional carboxylic acid may be a hydroxy carboxylic acid such as, for example, p-hydroxybenzoic acid, and the difunctional hydroxyl compound may be an aromatic nucleus bearing 2 hydroxyl substituents such as, for example, hydroquinone. The term "residue", as used herein, means any organic structure incorporated into a polymer through a polycondensation and/or an esterification reaction from the corresponding monomer. The term "repeating unit", as used herein, means an organic structure having a dicarboxylic acid residue and a diol residue bonded through a carbonyloxy group. Thus, for example, the dicarboxylic acid residues may be derived from a dicarboxylic acid monomer or its associated acid halides, esters, salts, anhydrides, and/or mixtures thereof. Furthermore, as used herein, the term "diacid" includes multifunctional acids, for example, branching agents. As used herein, therefore, the term "dicarboxylic acid" is intended to include dicarboxylic acids and any derivative of a dicarboxylic acid, including its associated acid halides, esters, half-esters, salts, half-salts, anhydrides, mixed anhydrides, and/or mixtures thereof, useful in a reaction process with a diol to make polyester. As used herein, the term "terephthalic acid" is intended to include terephthalic acid itself and residues thereof as well as any derivative of terephthalic acid, including its associated acid halides, esters, half-esters, salts, half-salts, anhydrides, mixed anhydrides, and/or mixtures thereof or residues thereof useful in a reaction process with a diol to make polyester.

The polyesters used in the present invention typically can be prepared from dicarboxylic acids and diols which react in substantially equal proportions and are incorporated into the polyester polymer as their corresponding residues. The polyesters of the present invention, therefore, can contain substantially equal molar proportions of acid residues (100 mole%) and diol (and/or multifunctional hydroxyl compound) residues (100 mole%) such that the total moles of repeating units is equal to 100 mole%. The mole percentages provided in the present disclosure, therefore, may be based on the total moles of acid residues, the total moles of diol residues, or the total moles of repeating units. For example, a polyester containing 30 mole% isophthalic acid, based on the total acid residues, means the polyester contains 30 mole% isophthalic acid residues out of a total of 100 mole% acid residues. Thus, there are 30 moles of isophthalic acid residues among every 100 moles of acid residues. In another example, a polyester containing 30 mole% 2,2,4,4-tetramethyl-1,3-cyclobutanediol, based on the total diol residues, means the polyester contains 30 mole% 2,2,4,4-tetramethyl-1,3-cyclobutanediol residues out of a total of 100 mole% diol residues. Thus, there are 30 moles of 2,2,4,4-tetramethyl-1,3-cyclobutanediol residues among every 100 moles of diol residues.

The carboxylic acid component of the polyesters useful in the invention can be further modified with up to 10 mole %, such as up to 5 mole % or up to 1 mole % of one or more aliphatic dicarboxylic acids containing 2-16 carbon atoms, such as, for example, cyclohexanedicarboxylic, malonic, succinic, glutaric, adipic, pimelic, suberic, azelaic and dodecanedioic dicarboxylic acids. Certain embodiments can also comprise 0.01 to 10 mole %, such as 0.1 to 10 mole %, 1 or 10 mole %, 5 to 10 mole % of one or more modifying aliphatic dicarboxylic acids. Yet another embodiment contains 0 mole % modifying aliphatic dicarboxylic acids. The total mole % of the dicarboxylic acid component is 100 mole %. In one embodiment, adipic acid and/or glutaric acid are provided in the modifying aliphatic dicarboxylic acid component of the invention.

The modifying dicarboxylic acids of the invention can include indan dicarboxylic acids, for example, indan-1,3-dicarboxylic acids and/or phenylindan dicarboxylic acids. In one embodiment, the dicarboxylic acid may be chosen from at least one of 1,2,3-trimethyl-3-phenylindan-4',5-dicarboxylic acid and 1,1,3-trimethyl-5-carboxy-3-(4-carboxyphenyl)indan dicarboxylic acid. For the purposes of this invention, any of the indan dicarboxylic acids described in United States Patent Application Publication No. 2006/0004151A1 entitled "Copolymers Containing Indan Moieties and Blends Thereof' by Shaikh et al., assigned to General Electric Company, may be used as at least one modifying dicarboxylic acid within the scope of this invention; United States Patent Application Publication No. 2006/0004151A1 is incorporated herein by reference with respect to any of the indan dicarboxylic acids described therein.

Esters of terephthalic acid and the other modifying dicarboxylic acids or their corresponding esters and/or salts may be used instead of the dicarboxylic acids. Suitable examples of dicarboxylic acid esters include, but are not limited to, the dimethyl, diethyl, dipropyl, diisopropyl, dibutyl, and diphenyl esters. In one embodiment, the esters are chosen from at least one of the following: methyl, ethyl, propyl, isopropyl, and phenyl esters.

In other aspects of the invention, the glycol component for the polyesters according to the invention includes but is not limited to at least one of the following combinations of ranges: 1 to 99 mole % 2,2,4,4-tetramethyl-1,3-cyclobutanediol and 1 to 99 mole % 1,4-cyclohexanedimethanol; 1 to 95 mole % 2,2,4,4-tetramethyl-1,3-cyclobutanediol and 5 to 99 mole % cyclohexanedimethanol; 1 to 90 mole % 2,2,4,4-tetramethyl-1,3-cyclobutanediol and 10 to 99 mole % cyclohexanedimethanol; 1 to 85 mole % 2,2,4,4-tetramethyl-1,3-cyclobutanediol and 15 to 99 mole % cyclohexanedimethanol; 1 to 80 mole % 2,2,4,4-tetramethyl-1,3-cyclobutanediol and 20 to 99 mole % cyclohexanedimethanol, 1 to 75 mole % 2,2,4,4-tetramethyl-1,3-cyclobutanediol and 25 to 99 mole % cyclohexanedimethanol; 1 to 70 mole % 2,2,4,4-tetramethyl-1,3-cyclobutanediol and 30 to 99 mole % cyclohexanedimethanol; 1 to 65 mole % 2,2,4,4-tetramethyl-1,3-cyclobutanediol and 35 to 99 mole % cyclohexanedimethanol; 1 to 60 mole % 2,2,4,4-tetramethyl-1,3-cyclobutanediol and 40 to 99 mole % cyclohexanedimethanol; 1 to 55 mole % 2,2,4,4-tetramethyl-1,3-cyclobutanediol and 45 to 99 mole % cyclohexanedimethanol; 1 to 50 mole % 2,2,4,4-tetramethyl-1,3-cyclobutanediol and 50 to 99 mole % cyclohexanedimethanol; 1 to 45 mole % 2,2,4,4-tetramethyl-1,3-cyclobutanediol and 55 to 99 mole % cyclohexanedimethanol; 1 to 40 mole % 2,2,4,4-tetramethyl-1,3-cyclobutanediol and 60 to 99 mole % cyclohexanedimethanol; 1 to 35 mole % 2,2,4,4-tetramethyl-1,3-cyclobutanediol and 65 to 99 mole % cyclohexanedimethanol; 1 to 30 mole % 2,2,4,4-tetramethyl-1,3-cyclobutanediol and 70 to 99 mole % cyclohexanedimethanol; 1 to 25 mole % 2,2,4,4-tetramethyl-1,3-cyclobutanediol and 75 to 99 mole % cyclohexanedimethanol; 1 to 20 mole % 2,2,4,4-tetramethyl-1,3-cyclobutanediol and 80 to 99 mole % cyclohexanedimethanol; 1 to 15 mole % 2,2,4,4-tetramethyl-1,3-cyclobutanediol and 85 to 99 mole % cyclohexanedimethanol; 1 to 10 mole % 2,2,4,4-tetramethyl-1,3-cyclobutanediol and 90 to 99 mole % cyclohexanedimethanol; and 1 to 5 mole % 2,2,4,4-tetramethyl-1,3-cyclobutanediol and 95 to 99 mole % cyclohexanedimethanol.

In other aspects of the invention, the glycol component includes but is not limited to at least one of the following combinations of ranges: 3 to 10 mole % 2,2,4,4-tetramethyl-1,3-cyclobutanediol and 90 to 97 mole % cyclohexanedimethanol; 3 to 9 mole % 2,2,4,4-tetramethyl-1,3-cyclobutanediol and 91 to 97 mole % cyclohexanedimethanol; and 3 to 8 mole % 2,2,4,4-tetramethyl-1,3-cyclobutanediol and 92 to 97 mole % cyclohexanedimethanol.

In other aspects of the invention, the glycol component includes but is not limited to at least one of the following combinations of ranges: 5 to 99 mole % 2,2,4,4-tetramethyl-1,3-cyclobutanediol and 1 to 95 mole % cyclohexanedimethanol; 5 to 95 mole % 2,2,4,4-tetramethyl-1,3-cyclobutanediol and 5 to 95 mole % cyclohexanedimethanol; 5 to 90 mole % 2,2,4,4-tetramethyl-1,3-cyclobutanediol and 10 to 95 mole % cyclohexanedimethanol; 5 to 85 mole % 2,2,4,4-tetramethyl-1,3-cyclobutanediol and 15 to 95 mole % cyclohexanedimethanol; 5 to 80 mole % 2,2,4,4-tetramethyl-1,3-cyclobutanediol and 20 to 95 mole % cyclohexanedimethanol, 5 to 75 mole % 2,2,4,4-tetramethyl-1,3-cyclobutanediol and 25 to 95 mole % cyclohexanedimethanol; 5 to 70 mole % 2,2,4,4-tetramethyl-1,3-cyclobutanediol and 30 to 95 mole % cyclohexanedimethanol; 5 to 65 mole % 2,2,4,4-tetramethyl-1,3-cyclobutanediol and 35 to 95 mole % cyclohexanedimethanol; 5 to 60 mole % 2,2,4,4-tetramethyl-1,3-cyclobutanediol and 40 to 95 mole % cyclohexanedimethanol; 5 to 55 mole % 2,2,4,4-tetramethyl-1,3-cyclobutanediol and 45 to 95 mole % cyclohexanedimethanol; and 5 to 50 mole % 2,2,4,4-tetramethyl-1,3-cyclobutanediol and 50 to 95 mole % cyclohexanedimethanol.

In other aspects of the invention, the glycol component includes but is not limited to at least one of the following combinations of ranges: 5 to less than 50 mole % 2,2,4,4-tetramethyl-1,3-cyclobutanediol and greater than 50 to 95 mole % cyclohexanedimethanol; 5 to 45 mole % 2,2,4,4-tetramethyl-1,3-cyclobutanediol and 55 to 95 mole % cyclohexanedimethanol; 5 to 40 mole % 2,2,4,4-tetramethyl-1,3-cyclobutanediol and 60 to 95 mole % cyclohexanedimethanol; 5 to 35 mole % 2,2,4,4-tetramethyl-1,3-cyclobutanediol and 65 to 95 mole % cyclohexanedimethanol; 5 to less than 35 mole % 2,2,4,4-tetramethyl-1,3-cyclobutanediol and greater than 65 to 95 mole % cyclohexanedimethanol; 5 to 30 mole % 2,2,4,4-tetramethyl-1,3-cyclobutanediol and 70 to 95 mole % cyclohexanedimethanol; 5 to 25 mole % 2,2,4,4-tetramethyl-1,3-cyclobutanediol and 75 to 95 mole % cyclohexanedimethanol; 5 to 20 mole % 2,2,4,4-tetramethyl-1,3-cyclobutanediol and 80 to 95 mole % cyclohexanedimethanol; 5 to 15 mole % 2,2,4,4-tetramethyl-1,3-cyclobutanediol and 85 to 95 mole % cyclohexanedimethanol; 5 to 10 mole % 2,2,4,4-tetramethyl-1,3-cyclobutanediol and 90 to 95 mole % cyclohexanedimethanol; greater than 5 to less than 10 mole % 2,2,4,4-tetramethyl-1,3-cyclobutanediol and less than 90 to greater than 95 mole % cyclohexanedimethanol; 5.5 mole % to 9.5 mole % 2,2,4,4-tetramethyl-1,3-cyclobutanediol and 94.5 mole % to 90.5 mole % cyclohexanedimethanol; and 6 to 9 mole % 2,2,4,4-tetramethyl-1,3-cyclobutanediol and 94 to 91 mole % cyclohexanedimethanol.

In other aspects of the invention, the glycol component includes but is not limited to at least one of the following combinations of ranges: 10 to 99 mole % 2,2,4,4-tetramethyl-1,3-cyclobutanediol and 1 to 90 mole % cyclohexanedimethanol; 10 to 95 mole % 2,2,4,4-tetramethyl-1,3-cyclobutanediol and 5 to 90 mole % cyclohexanedimethanol; 10 to 90 mole % 2,2,4,4-tetramethyl-1,3-cyclobutanediol and 10 to 90 mole % cyclohexanedimethanol; 10 to 85 mole % 2,2,4,4-tetramethyl-1,3-cyclobutanediol and 15 to 90 mole % cyclohexanedimethanol; 10 to 80 mole % 2,2,4,4-tetramethyl-1,3-cyclobutanediol and 20 to 90 mole % cyclohexanedimethanol; 10 to 75 mole % 2,2,4,4-tetramethyl-1,3-cyclobutanediol and 25 to 90 mole % cyclohexanedimethanol; 10 to 70 mole % 2,2,4,4-tetramethyl-1,3-cyclobutanediol and 30 to 90 mole % cyclohexanedimethanol; 10 to 65 mole % 2,2,4,4-tetramethyl-1,3-cyclobutanediol and 35 to 90 mole % cyclohexanedimethanol; 10 to 60 mole % 2,2,4,4-tetramethyl-1,3-cyclobutanediol and 40 to 90 mole % cyclohexanedimethanol; 10 to 55 mole % 2,2,4,4-tetramethyl-1,3-cyclobutanediol and 45 to 90 mole % cyclohexanedimethanol; 10 to 50 mole % 2,2,4,4-tetramethyl-1,3-cyclobutanediol and 50 to 90 mole % cyclohexanedimethanol; 10 to less than 50 mole % 2,2,4,4-tetramethyl-1,3-cyclobutanediol and greater than 50 to 90 mole % cyclohexanedimethanol; 10 to 45 mole % 2,2,4,4-tetramethyl-1,3-cyclobutanediol and 55 to 90 mole % cyclohexanedimethanol; 10 to 40 mole % 2,2,4,4-tetramethyl-1,3-cyclobutanediol and 60 to 90 mole % cyclohexanedimethanol; 10 to 35 mole % 2,2,4,4-tetramethyl1,3-cyclobutanediol and 65 to 90 mole % cyclohexanedimethanol; 10 to less than 35 mole % 2,2,4,4-tetramethyl-1,3-cyclobutanediol and greater than 65 to 90 % cyclohexanedimethanol; 10 to 30 mole % 2,2,4,4-tetramethyl-1,3-cyclobutanediol and 70 to 90 mole % cyclohexanedimethanol; 10 to 25 mole % 2,2,4,4-tetramethyl-1,3-cyclobutanediol and 75 to 90 mole % cyclohexanedimethanol; 10 to 20 mole % 2,2,4,4-tetramethyl-1,3-cyclobutanediol and 80 to 90 mole % cyclohexanedimethanol; and 10 to 15 mole % 2,2,4,4-tetramethyl-1,3-cyclobutanediol and 85 to 90 mole % cyclohexanedimethanol.

In other aspects of the invention, the glycol component includes but is not limited to at least one of the following combinations of ranges: 10 to 100 mole % 2,2,4,4-tetramethyl-1,3-cyclobutanediol and 0 to 90 mole % cyclohexanedimethanol; greater than 10 to 99 mole % 2,2,4,4-tetramethyl-1,3-cyclobutanediol and 1 to less than 90 mole % cyclohexanedimethanol; greater than 10 to 95 mole % 2,2,4,4-tetramethyl-1,3-cyclobutanediol and 5 to less than 90 mole % cyclohexanedimethanol; greater than 10 to 90 mole % 2,2,4,4-tetramethyl-1,3-cyclobutanediol and 10 to less than 90 mole % cyclohexanedimethanol; greater than 10 to 85 mole % 2,2,4,4-tetramethyl-1,3-cyclobutanediol and 15 to less than 90 mole % cyclohexanedimethanol; greater than 10 to 80 mole % 2,2,4,4-tetramethyl-1,3-cyclobutanediol and 20 to less than 90 mole % cyclohexanedimethanol; greater than 10 to 75 mole % 2,2,4,4-tetramethyl-1,3-cyclobutanediol and 25 to less than 90 mole % cyclohexanedimethanol; greater than 10 to 70 mole % 2,2,4,4-tetramethyl-1,3-cyclobutanediol and 30 to less than 90 mole % cyclohexanedimethanol; greater than 10 to 65 mole % 2,2,4,4-tetramethyl-1,3-cyclobutanediol and 35 to less than 90 mole % cyclohexanedimethanol; greater than 10 to 60 mole % 2,2,4,4-tetramethyl-1,3-cyclobutanediol and 40 to less than 90 mole % cyclohexanedimethanol; greater than 10 to 55 mole % 2,2,4,4-tetramethyl-1,3-cyclobutanediol and 45 to less than 90 mole % cyclohexanedimethanol; greater than 10 to 50 mole % 2,2,4,4-tetramethyl-1,3-cyclobutanediol and 50 to less than 90 mole % cyclohexanedimethanol; greater than 10 to less than 50 mole % 2,2,4,4-tetramethyl-1,3-cyclobutanediol and greater than 50 to less than 90 mole % cyclohexanedimethanol; greater than 10 to 45 mole % 2,2,4,4-tetramethyl-1,3-cyclobutanediol and 55 to less than 90 mole % cyclohexanedimethanol; greater than 10 to 40 mole % 2,2,4,4-tetramethyl-1,3-cyclobutanediol and 60 to less than 90 mole % cyclohexanedimethanol; greater than 10 to 35 mole % 2,2,4,4-tetramethyl-1,3-cyclobutanediol and 65 to less than 90 mole % cyclohexanedimethanol; 10 to less than 34 mole % 2,2,4,4-tetramethyl-1,3-cyclobutanediol and greater than 66 to 90 % cyclohexanedimethanol; greater than 10 to 30 mole % 2,2,4,4-tetramethyl-1,3-cyclobutanediol and 70 to less than 90 mole % cyclohexanedimethanol; greater than 10 to 25 mole % 2,2,4,4-tetramethyl-1,3-cyclobutanediol and 75 to less than 90 mole % cyclohexanedimethanol; greater than 10 to 20 mole % 2,2,4,4-tetramethyl-1,3-cyclobutanediol and 80 to less than 90 mole % cyclohexanedimethanol; and greater than 10 to 15 mole % 2,2,4,4tetramethyl-1,3-cyclobutanediol and 85 to less than 90 mole % cyclohexanedimethanol.

In other aspects of the invention, the glycol component includes but is not limited to at least one of the following combinations of ranges: 11 to 99 mole % 2,2,4,4-tetramethyl-1,3-cyclobutanediol and 1 to 89 mole % cyclohexanedimethanol; 11 to 95 mole % 2,2,4,4-tetramethyl-1,3-cyclobutanediol and 5 to 89 mole % cyclohexanedimethanol; 11 to 90 mole % 2,2,4,4-tetramethyl-1,3-cyclobutanediol and 10 to 89 mole % cyclohexanedimethanol; 11 to 85 mole % 2,2,4,4-tetramethyl-1,3-cyclobutanediol and 15 to 89 mole % cyclohexanedimethanol; 11 to 80 mole % 2,2,4,4-tetramethyl-1,3-cyclobutanediol and 20 to 89 mole % cyclohexanedimethanol; 11 to 75 mole % 2,2,4,4-tetramethyl-1,3-cyclobutanediol and 25 to 89 mole % cyclohexanedimethanol; 11 to 70 mole % 2,2,4,4-tetramethyl-1,3-cyclobutanediol and 30 to 89 mole % cyclohexanedimethanol; 11 to 65 mole % 2,2,4,4-tetramethyl-1,3-cyclobutanediol and 35 to 89 mole % cyclohexanedimethanol; 11 to 60 mole % 2,2,4,4-tetramethyl-1,3-cyclobutanediol and 40 to 89 mole % cyclohexanedimethanol; 11 to 55 mole % 2,2,4,4-tetramethyl-1,3-cyclobutanediol and 45 to 89 mole % cyclohexanedimethanol; 11 to 50 mole % 2,2,4,4-tetramethyl-1,3-cyclobutanediol and 50 to 89 mole % cyclohexanedimethanol; 11 to less than 50 mole % 2,2,4,4-tetramethyl-1,3-cyclobutanediol and greater than 50 to 89 mole % cyclohexanedimethanol; 11 to 45 mole % 2,2,4,4-tetramethyl-1,3-cyclobutanediol and 55 to 89 mole % cyclohexanedimethanol; 11 to 40 mole % 2,2,4,4-tetramethyl-1,3-cyclobutanediol and 60 to 89 mole % cyclohexanedimethanol; 11 to 35 mole % 2,2,4,4-tetramethyl-1,3-cyclobutanediol and 65 to 89 mole % cyclohexanedimethanol; 11 to 30 mole % 2,2,4,4-tetramethyl-1,3-cyclobutanediol and 70 to 89 mole % cyclohexanedimethanol; 11 to 24 mole % 2,2,4,4-tetramethyl-1,3-cyclobutanediol and 76 to 89 mole % cyclohexanedimethanol; and 11 to 25 mole % 2,2,4,4-tetramethyl-1,3-cyclobutanediol and 75 to 89 mole % cyclohexanedimethanol.

In other aspects of the invention, the glycol component includes but is not limited to at least one of the following combinations of ranges: 12 to 99 mole % 2,2,4,4-tetramethyl-1,3-cyclobutanediol and 1 to 88 mole % cyclohexanedimethanol; 12 to 95 mole % 2,2,4,4-tetramethyl-1,3-cyclobutanediol and 5 to 88 mole % cyclohexanedimethanol; 12 to 90 mole % 2,2,4,4-tetramethyl-1,3-cyclobutanediol and 10 to 88 mole % cyclohexanedimethanol; 12 to 85 mole % 2,2,4,4-tetramethyl-1,3-cyclobutanediol and 15 to 88 mole % cyclohexanedimethanol; 12 to 80 mole % 2,2,4,4-tetramethyl-1,3-cyclobutanediol and 20 to 88 mole % cyclohexanedimethanol; 12 to 75 mole % 2,2,4,4-tetramethyl-1,3-cyclobutanediol and 25 to 88 mole % cyclohexanedimethanol; 12 to 70 mole % 2,2,4,4-tetramethyl-1,3-cyclobutanediol and 30 to 88 mole % cyclohexanedimethanol; 12 to 65 mole % 2,2,4,4-tetramethyl-1,3-cyclobutanediol and 35 to 88 mole % cyclohexanedimethanol; 12 to 60 mole % 2,2,4,4-tetramethyl-1,3-cyclobutanediol and 40 to 88 mole % cyclohexanedimethanol; 12 to 55 mole % 2,2,4,4-tetramethyl-1,3-cyclobutanediol and 45 to 88 mole % cyclohexanedimethanol; 12 to 50 mole % 2,2,4,4-tetramethyl-1,3-cyclobutanediol and 50 to 88 mole % cyclohexanedimethanol; 12 to less than 50 mole % 2,2,4,4-tetramethyl-1,3-cyclobutanediol and greater than 50 to 88 mole % cyclohexanedimethanol; 12 to 45 mole % 2,2,4,4-tetramethyl-1,3-cyclobutanediol and 55 to 88 mole % cyclo-hexanedimethanol; 12 to 40 mole % 2,2,4,4-tetramethyl-1,3-cyclobutanediol and 60 to 88 mole % cyclohexanedimethanol; 12 to 35 mole % 2,2,4,4-tetramethyl-1,3-cyclobutanediol and 65 to 88 mole % cyclohexanedimethanol; 12 to 30 mole % 2,2,4,4-tetramethyl-1,3-cyclobutanediol and 70 to 88 mole % cyclohexanedimethanol; 12 to 24 mole % 2,2,4,4-tetramethyl-1,3-cyclobutanediol and 76 to 88 mole % cyclohexanedimethanol; and 12 to 25 mole % 2,2,4,4-tetramethyl-1,3-cyclobutanediol and 75 to 88 mole % cyclohexanedimethanol.

In other aspects of the invention, the glycol component includes but is not limited to at least one of the following combinations of ranges: 13 to 99 mole % 2,2,4,4-tetramethyl-1,3-cyclobutanediol and 1 to 87 mole % cyclohexanedimethanol; 13 to 95 mole % 2,2,4,4-tetramethyl-1,3-cyclobutanediol and 5 to 87 mole % cyclohexanedimethanol; 13 to 90 mole % 2,2,4,4-tetramethyl-1,3-cyclobutanediol and 10 to 87 mole % cyclohexanedimethanol; 13 to 85 mole % 2,2,4,4-tetramethyl-1,3-cyclobutanediol and 15 to 87 mole % cyclohexanedimethanol; 13 to 80 mole % 2,2,4,4-tetramethyl-1,3-cyclobutanediol and 20 to 87 mole % cyclohexanedimethanol; 13 to 75 mole % 2,2,4,4-tetramethyl-1,3-cyclobutanediol and 25 to 87 mole % cyclohexanedimethanol; 13 to 70 mole % 2,2,4,4-tetramethyl-1,3-cyclobutanediol and 30 to 87 mole % cyclohexanedimethanol; 13 to 65 mole % 2,2,4,4-tetramethyl-1,3-cyclobutanediol and 35 to 87 mole % cyclohexanedimethanol; 13 to 60 mole % 2,2,4,4-tetramethyl-1,3-cyclobutanediol and 40 to 87 mole % cyclohexanedimethanol; 13 to 55 mole % 2,2,4,4-tetramethyl-1,3-cyclobutanediol and 45 to 87 mole % cyclohexanedimethanol; 13 to 50 mole % 2,2,4,4-tetramethyl-1,3-cyclobutanediol and 50 to 87 mole % cyclohexanedimethanol; 13 to less than 50 mole % 2,2,4,4-tetramethyl-1,3-cyclobutanediol and greater than 50 to 87 mole % cyclohexanedimethanol; 13 to 45 mole % 2,2,4,4-tetramethyl-1,3-cyclobutanediol and 55 to 87 mole % cyclohexanedimethanol; 13 to 40 mole % 2,2,4,4-tetramethyl-1,3-cyclobutanediol and 60 to 87 mole % cyclohexanedimethanol; 13 to 35 mole % 2,2,4,4-tetramethyl-1,3-cyclobutanediol and 65 to 87 mole % cyclohexanedimethanol; 13 to 30 mole % 2,2,4,4-tetramethyl-1,3-cyclobutanediol and 70 to 87 mole % cyclohexanedimethanol; 13 to 24 mole % 2,2,4,4-tetramethyl-1,3-cyclobutanediol and 76 to 87 mole % cyclohexanedimethanol; and 13 to 25 mole % 2,2,4,4-tetramethyl-1,3-cyclobutanediol and 75 to 87 mole % cyclohexanedimethanol.

In other aspects of the invention, the glycol component includes but is not limited to at least one of the following combinations of ranges: 14 to 99 mole % 2,2,4,4-tetramethyl-1,3-cyclobutanediol and 1 to 86 mole % cyclohexanedimethanol; 14 to 95 mole % 2,2,4,4-tetramethyl-1,3-cyclobutanediol and 5 to 86 mole % cyclohexanedimethanol; 14 to 90 mole % 2,2,4,4-tetramethyl-1,3-cyclobutanediol and 10 to 86 mole % cyclohexanedimethanol; 14 to 85 mole % 2,2,4,4-tetramethyl-1,3-cyclobutanediol and 15 to 86 mole % cyclohexanedimethanol; 14 to 80mole % 2,2,4,4-tetramethyl-1,3-cyclobutanediol and 20 to 86 mole % cyclohexanedimethanol; 14 to 75 mole % 2,2,4,4-tetramethyl-1,3-cyclobutanediol and 25 to 86 mole % cyclohexanedimethanol; 14 to 70 mole % 2,2,4,4-tetramethyl-1,3-cyclobutanediol and 30 to 86 mole % cyclohexanedimethanol; 14 to 65 mole % 2,2,4,4-tetramethyl-1,3-cyclobutanediol and 35 to 86 mole % cyclohexanedimethanol; 14 to 60 mole % 2,2,4,4-tetramethyl-1,3-cyclobutanediol and 40 to 86 mole % cyclohexanedimethanol; 14 to 55 mole % 2,2,4,4-tetramethyl-1,3-cyclobutanediol and 45 to 86 mole % cyclohexanedimethanol; 14 to 50 mole % 2,2,4,4-tetramethyl-1,3-cyclobutanediol and 50 to 86 mole % cyclohexanedimethanol; 14 to less than 50 mole % 2,2,4,4-tetramethyl-1,3-cyclobutanediol and greater than 50 to 86 mole % cyclohexanedimethanol; 14 to 45 mole % 2,2,4,4-tetramethyl-1,3-cyclobutanediol and 55 to 86 mole % cyclohexanedimethanol; 14 to 40 mole % 2,2,4,4-tetramethyl-1,3-cyclobutanediol and 60 to 86 mole % cyclohexanedimethanol; 14 to 35 mole % 2,2,4,4-tetramethyl-1,3-cyclobutanediol and 65 to 86 mole % cyclohexanedimethanol; 14 to 30 mole % 2,2,4,4-tetramethyl-1,3-cyclobutanediol and 70 to 86 mole % cyclohexanedimethanol; 14 to 24 mole % 2,2,4,4-tetramethyl-1,3-cyclobutanediol and 76 to 86 mole % cyclohexanedimethanol; and 14 to 25 mole % 2,2,4,4-tetramethyl-1,3-cyclobutanediol and 75 to 86 mole % cyclohexanedimethanol.

In other aspects of the invention, the glycol component includes but is not limited to at least one of the following combinations of ranges: 15 to 99 mole % 2,2,4,4-tetramethyl-1,3-cyclobutanediol and 1 to 85 mole % cyclohexanedimethanol; 15 to 95 mole % 2,2,4,4-tetramethyl-1,3-cyclobutanediol and 5 to 85 mole % cyclohexanedimethanol; 15 to 90 mole % 2,2,4,4-tetramethyl-1,3-cyclobutanediol and 10 to 85 mole % cyclohexanedimethanol; 15 to 85 mole % 2,2,4,4-tetramethyl-1,3-cyclobutanediol and 15 to 85 mole % cyclohexanedimethanol; 15 to 80 mole % 2,2,4,4-tetramethyl-1,3-cyclobutanediol and 20 to 85 mole % cyclohexanedimethanol; 15 to 75 mole % 2,2,4,4-tetramethyl-1,3-cyclobutanediol and 25 to 85 mole % cyclohexanedimethanol; 15 to 70 mole % 2,2,4,4-tetramethyl-1,3-cyclobutanediol and 30 to 85 mole % cyclohexanedimethanol; 15 to 65 mole % 2,2,4,4-tetramethyl-1,3-cyclobutanediol and 35 to 85 mole % cyclohexanedimethanol; 15 to 60 mole % 2,2,4,4-tetramethyl-1,3-cyclobutanediol and 40 to 85 mole % cyclohexanedimethanol; 15 to 55 mole % 2,2,4,4-tetramethyl-1,3-cyclobutanediol and 45 to 85 mole % cyclohexanedimethanol; 15 to 50 mole % 2,2,4,4-tetramethyl-1,3-cyclobutanediol and 50 to 85 mole % cyclohexanedimethanol; 15 to less than 50 mole % 2,2,4,4-tetramethyl-1,3-cyclobutanediol and greater than 50 to 85 mole % cyclohexanedimethanol; 15 to 45 mole % 2,2,4,4-tetramethyl-1,3-cyclobutanediol and 55 to 85 mole % cyclo-hexanedimethanol; 15 to 40 mole % 2,2,4,4-tetramethyl-1,3-cyclobutanediol and 60 to 85 mole % cyclohexanedimethanol; 15 to 35 mole % 2,2,4,4-tetramethyl-1,3-cyclobutanediol and 65 to 85 mole % cyclohexanedimethanol; 15 to 30 mole % 2,2,4,4-tetramethyl-1,3-cyclobutanediol and 70 to 85 mole % cyclohexanedimethanol; 15 to 25 mole % 2,2,4,4-tetramethyl-1,3-cyclobutanediol and 75 to 85 mole % cyclohexanedimethanol; and 15 to 24 mole % 2,2,4,4-tetramethyl-1,3-cyclobutanediol and 76 to 85 mole % cyclohexanedimethanol.

In other aspects of the invention, the glycol component includes but is not limited to at least one of the following combinations of ranges: 20 to 99 mole % 2,2,4,4-tetramethyl-1,3-cyclobutanediol and 1 to 80 mole % cyclohexanedimethanol; 20 to 95 mole % 2,2,4,4-tetramethyl-1,3-cyclobutanediol and 5 to 80 mole % cyclohexanedimethanol; 20 to 90 mole % 2,2,4,4-tetramethyl-1,3-cyclobutanediol and 10 to 80 mole % cyclohexanedimethanol; 20 to 85 mole % 2,2,4,4-tetramethyl-1,3-cyclobutanediol and 15 to 80 mole % cyclohexanedimethanol; 20 to 80 mole % 2,2,4,4-tetramethyl-1,3-cyclobutanediol and 20 to 80 mole % cyclohexanedimethanol; 20 to 75 mole % 2,2,4,4-tetramethyl-1,3-cyclobutanediol and 25 to 80 mole % cyclohexanedimethanol; 20 to 70 mole % 2,2,4,4-tetramethyl-1,3-cyclobutanediol and 30 to 80 mole % cyclohexanedimethanol; 20 to 65 mole % 2,2,4,4-tetramethyl-1,3-cyclobutanediol and 35 to 80 mole % cyclohexanedimethanol; 20 to 60 mole % 2,2,4,4-tetramethyl-1,3-cyclobutanediol and 40 to 80 mole % cyclohexanedimethanol; 20 to 55 mole % 2,2,4,4-tetramethyl-1,3-cyclobutanediol and 45 to 80 mole % cyclohexanedimethanol; 20 to 50 mole % 2,2,4,4-tetramethyl-1,3-cyclobutanediol and 50 to 80 mole % cyclohexanedimethanol; 20 to less than 50 mole % 2,2,4,4-tetramethyl-1,3-cyclobutanediol and greater than 50 to 80 mole % cyclohexanedimethanol; 20 to 45 mole % 2,2,4,4-tetramethyl-1,3-cyclobutanediol and 55 to 80 mole % cyclohexanedimethanol; 20 to 40 mole % 2,2,4,4-tetramethyl-1,3-cyclobutanediol and 60 to 80 mole % cyclohexanedimethanol; 20 to 35 mole % 2,2,4,4-tetramethyl-1,3-cyclobutanediol and 65 to 80 mole % cyclohexanedimethanol; 20 to 30 mole % 2,2,4,4-tetramethyl-1,3-cyclobutanediol and 70 to 80 mole % cyclohexanedimethanol; and 20 to 25 mole % 2,2,4,4-tetramethyl-1,3-cyclobutanediol and 75 to 80 mole % cyclohexanedimethanol.

In other aspects of the invention, the glycol component includes but is not limited to at least one of the following combinations of ranges: 25 to 99 mole % 2,2,4,4-tetramethyl-1,3-cyclobutanediol and 1 to 75 mole % cyclohexanedimethanol; 25 to 95 mole % 2,2,4,4-tetramethyl-1,3-cyclobutanediol and 5 to 75 mole % cyclohexanedimethanol; 25 to 90 mole % 2,2,4,4-tetramethyl-1,3-cyclobutanediol and 10 to 75 mole % cyclohexanedimethanol; 25 to 85 mole % 2,2,4,4-tetramethyl-1,3-cyclobutanediol and 15 to 75 mole % cyclohexanedimethanol; 25 to 80 mole % 2,2,4,4-tetramethyl-1,3-cyclobutanediol and 20 to 75 mole % cyclohexanedimethanol; 25 to 75 mole % 2,2,4,4-tetramethyl-1,3-cyclobutanediol and 25 to 75 mole % cyclohexanedimethanol; 25 to 70 mole % 2,2,4,4-tetramethyl-1,3-cyclobutanediol and 30 to 75 mole % cyclohexanedimethanol; 25 to 65 mole % 2,2,4,4-tetramethyl-1,3-cyclobutanediol and 35 to 75 mole % cyclohexanedimethanol; 25 to 60 mole % 2,2,4,4-tetramethyl-1,3-cyclobutanediol and 40 to 75 mole % cyclohexanedimethanol; 25 to 55 mole % 2,2,4,4-tetramethyl-1,3-cyclobutanediol and 45 to 75 mole % cyclohexanedimethanol; 25 to 50 mole % 2,2,4,4-tetramethyl-1,3-cyclobutanediol and 50 to 75 mole % cyclohexanedimethanol; 25 to less than 50 mole % 2,2,4,4-tetramethyl-1,3-cyclobutanediol and greater than 50 to 75 mole % cyclohexanedimethanol; 25 to 45 mole % 2,2,4,4-tetramethyl-1,3-cyclobutanediol and 55 to 75 mole % cyclohexanedimethanol; 25 to 40 mole % 2,2,4,4-tetramethyl-1,3-cyclobutanediol and 60 to 75 mole % cyclohexanedimethanol; 25 to 35 mole % 2,2,4,4-tetramethyl-1,3-cyclobutanediol and 65 to 75 mole % cyclohexanedimethanol; and 25 to 30 mole % 2,2,4,4-tetramethyl-1,3-cyclobutanediol and 70 to 75 mole % cyclohexanedimethanol.

In other aspects of the invention, the glycol component includes but is not limited to at least one of the following combinations of ranges: 30 to 99 mole % 2,2,4,4-tetramethyl-1,3-cyclobutanediol and 1 to 70 mole % cyclohexanedimethanol; 30 to 95 mole % 2,2,4,4-tetramethyl-1,3-cyclobutanediol and 5 to 70 mole % cyclohexanedimethanol; 30 to 90 mole % 2,2,4,4-tetramethyl-1,3-cyclobutanediol and 10 to 70 mole % cyclohexanedimethanol; 30 to 85 mole % 2,2,4,4-tetramethyl-1,3-cyctobutanediol and 15 to 70 mole % cyclohexanedimethanol; 30 to 80 mole % 2,2,4,4-tetramethyl-1,3-cyclobutanediol and 20 to 70 mole % cyclohexanedimethanol; 30 to 75 mole % 2,2,4,4-tetramethyl-1,3-cyclobutanediol and 25 to 70 mole % cyclohexanedimethanol; 30 to 70 mole % 2,2,4,4-tetramethyl-1,3-cyclobutanediol and 30 to 70 mole % cyclohexanedimethanol; 30 to 65 mole % 2,2,4,4-tetramethyl-1,3-cyclobutanediol and 35 to 70 mole % cyclohexanedimethanol; 30 to 60 mole % 2,2,4,4-tetramethyl-1,3-cyclobutanediol and 40 to 70 mole % cyclohexanedimethanol; 30 to 55 mole % 2,2,4,4-tetramethyl-1,3-cyclobutanediol and 45 to 70 mole % cyclohexanedimethanol; 30 to 50 mole % 2,2,4,4-tetramethyl-1,3-cyclobutanediol and 50 to 70 mole % cyclohexanedimethanol; 30 to less than 50 mole % 2,2,4,4-tetramethyl-1,3-cyclobutanediol and greater than 50 to 70 mole % cyclohexanedimethanol; 30 to 45 mole % 2,2,4,4-tetramethyl-1,3-cyclobutanediol and 55 to 70 mole % cyclohexanedimethanol; 30 to 40 mole % 2,2,4,4-tetramethyl-1,3-cyclobutanediol and 60 to 70 mole % cyclohexanedimethanol; 30 to 35 mole % 2,2,4,4-tetramethyl-1,3-cyclobutanediol and 65 to 70 mole % cyclohexanedimethanol.

In other aspects of the invention, the glycol component includes but is not limited to at least one of the following combinations of ranges: 35 to 99 mole % 2,2,4,4-tetramethyl-1,3-cyclobutanediol and 1 to 65 mole % cyclohexanedimethanol; 35 to 95 mole % 2,2,4,4-tetramethyl-1,3-cyclobutanediol and 5 to 65 mole % cyclohexanedimethanol; 35 to 90 mole % 2,2,4,4-tetramethyl-1,3-cyclobutanediol and 10 to 65 mole % cyclohexanedimethanol; 35 to 85 mole % 2,2,4,4-tetramethyl-1,3-cyclobutanediol and 15 to 65 mole % cyclohexanedimethanol; 35 to 80 mole % 2,2,4,4-tetramethyl-1,3-cyclobutanediol and 20 to 65 mole % cyclohexanedimethanol; 35 to 75 mole % 2,2,4,4-tetramethyl-1,3-cyclobutanediol and 25 to 65 mole % cyclohexanedimethanol; 35 to 70 mole % 2,2,4,4-tetramethyl-1,3-cyclobutanediol and 30 to 65 mole % cyclohexanedimethanol; 35 to 65 mole % 2,2,4,4-tetramethyl-1,3-cyclobutanediol and 35 to 65 mole % cyclohexanedimethanol; 35 to 60 mole % 2,2,4,4-tetramethyl-1,3-cyclobutanediol and 40 to 65 mole % cyclohexanedimethanol; 35 to 55 mole % 2,2,4,4-tetramethyl-1,3-cyclobutanediol and 45 to 65 mole % cyclohexanedimethanol; 35 to 50 mole % 2,2,4,4-tetramethyl-1,3-cyclobutanediol and 50 to 65 mole % cyclohexanedimethanol; 35 to less than 50 mole % 2,2,4,4-tetramethyl-1,3-cyclobutanediol and greater than 50 to 65 mole % cyclohexanedimethanol; 35 to 45 mole % 2,2,4,4-tetramethyl-1,3-cyclobutanediol and 55 to 65 mole % cyclohexanedimethanol; 35 to 40 mole % 2,2,4,4-tetramethyl-1,3-cyclobutanediol and 60 to 65 mole % cyclohexanedimethanol.

In other aspects of the invention, the glycol component includes but is not limited to at least one of the following combinations of ranges: 40.1 to 100 mole % 2,2,4,4-tetramethyl-1,3-cyclobutanediol and 1 to 59.9 mole % cyclohexanedimethanol 40 to 99 mole % 2,2,4,4-tetramethyl-1,3-cyclobutanediol and 1 to 60 mole % cyclohexanedimethanol; 40 to 95 mole % 2,2,4,4-tetramethyl-1,3-cyclobutanediol and 5 to 60 mole % cyclohexanedimethanol; 40 to 90 mole % 2,2,4,4-tetramethyl-1,3-cyclobutanediol and 10 to 60 mole % cyclohexanedimethanol; 40 to 85 mole % 2,2,4,4-tetramethyl-1,3-cyclobutanediol and 15 to 60 mole % cyclohexanedimethanol; 40 to 80 mole % 2,2,4,4-tetramethyl-1,3-cyclobutanediol and 20 to 60 mole % cyclohexanedimethanol; 40 to 75 mole % 2,2,4,4-tetramethyl-1,3-cyclobutanediol and 25 to 60 mole % cyclohexanedimethanol; 40 to 70 mole % 2,2,4,4-tetramethyl-1,3-cyclobutanediol and 30 to 60 mole % cyclohexanedimethanol; 40 to 65 mole % 2,2,4,4-tetramethyl-1,3-cyclobutanediol and 35 to 60 mole % cyclohexanedimethanol; 40 to 60 mole % 2,2,4,4-tetramethyl-1,3-cyclobutanediol and 40 to 60 mole % cyclohexanedimethanol; 40 to 55 mole % 2,2,4,4-tetramethyl-1,3-cyclobutanediol and 45 to 60 mole % cyclohexanedimethanol; 40 to less than 50 mole % 2,2,4,4-tetramethyl-1,3-cyclobutanediol and greater than 50 to 60 mole % cyclohexanedimethanol; 40 to 50 mole % 2,2,4,4-tetramethyl-1,3-cyclobutanediol and 50 to 60 mole % cyclohexanedimethanol; and 40 to 45 mole % 2,2,4,4-tetramethyl-1,3-cyclobutanediol and 55 to 60 mole % cyclohexanedimethanol.

In other aspects of the invention, the glycol component includes but is not limited to at least one of the following combinations of ranges: 45 to 100 mole % 2,2,4,4-tetramethyl-1,3-cyclobutanediol and 0 to 55 mole % cyclohexanedimethanol; 45 to 99 mole % 2,2,4,4-tetramethyl-1,3-cyclobutanediol and 1 to 55 mole % cyclohexanedimethanol; 45 to 95 mole % 2,2,4,4-tetramethyl-1,3-cyclobutanediol and 5 to 55 mole % cyclohexanedimethanol; 45 to 90 mole % 2,2,4,4-tetramethyl-1,3-cyclobutanediol and 10 to 55 mole % cyclohexanedimethanol; 45 to 85 mole % 2,2,4,4-tetramethyl-1,3-cyclobutanediol and 15 to 55 mole % cyclohexanedimethanol; 45 to 80 mole % 2,2,4,4-tetramethyl-1,3-cyclobutanediol and 20 to 55 mole % cyclohexanedimethanol; 45 to 75 mole % 2,2,4,4-tetramethyl-1,3-cyclobutanediol and 25 to 55 mole % cyclohexanedimethanol; 45 to 70 mole % 2,2,4,4-tetramethyl-1,3-cyclobutanediol and 30 to 55 mole % cyclohexanedimethanol; 45 to 65 mole % 2,2,4,4-tetramethyl-1,3-cyclobutanediol and 35 to 55 mole % cyclohexanedimethanol; 45 to 60 mole % 2,2,4,4-tetramethyl-1,3-cyclobutanediol and 40 to 55 mole % cyclohexanedimethanol; greater than 45 to 55 mole % 2,2,4,4-tetramethyl-1,3-cyclobutanediol and 45 to less than 55 mole % cyclohexanedimethanol; 45 to 55 mole % 2,2,4,4-tetramethyl-1,3-cyclobutanediol and 45 to 55 mole % cyclohexanedimethanol; and 45 to 50 mole % 2,2,4,4-tetramethyl-1,3-cyclobutanediol and 50 to 60 mole % cyclohexanedimethanol.

In other aspects of the invention, the glycol component includes but is not limited to at least one of the following combinations of ranges: greater than 50 to 99 mole % 2,2,4,4-tetramethyl-1,3-cyclobutanediol and 1 to less than 50 mole % cyclohexanedimethanol; greater than 50 to 95 mole % 2,2,4,4-tetramethyl-1,3-cyclobutanediol and 5 to less than 50 mole % cyclohexanedimethanol; greater than 50 to 90 mole % 2,2,4,4-tetramethyl-1,3-cyclobutanediol and 10 to less than 50 mole % cyclohexanedimethanol; greater than 50 to 85 mole % 2,2,4,4-tetramethyl-1,3-cyclobutanediol and 15 to less than 50 mole % cyclohexanedimethanol; greater than 50 to 80 mole % 2,2,4,4-tetramethyl-1,3-cyclobutanediol and 20 to less than 50 mole % cyclohexanedimethanol; greater than 50 to 75 mole % 2,2,4,4-tetramethyl-1,3-cyclobutanediol and 25 to less than 50 mole % cyclohexanedimethanol; greater than 50 to 70 mole % 2,2,4,4-tetramethyl-1,3-cyclobutanediol and 30 to less than 50 mole % cyclohexanedimethanol; greater than 50 to 65 mole % 2,2,4,4-tetramethyl-1,3-cyclobutanediol and 35 to less than 50 mole % cyclohexanedimethanol; greater than 50 to 60 mole % 2,2,4,4-tetramethyl-1,3-cyclobutanediol and 40 to less than 50 mole % cyclohexanedimethanol.

In other aspects of the invention, the glycol component includes but is not limited to at least one of the following combinations of ranges: greater than 51 to 99 mole % 2,2,4,4-tetramethyl-1,3-cyclobutanediol and 1 to less than 49 mole % cyclohexanedimethanol; greater than 51 to 95 mole % 2,2,4,4-tetramethyl-1,3-cyclobutanediol and 5 to less than 49 mole % cyclohexanedimethanol; greater than 51 to 90 mole % 2,2,4,4-tetramethyl-1,3-cyclobutanediol and 10 to less than 49 mole % cyclohexanedimethanol; greater than 51 to 85 mole % 2,2,4,4-tetramethyl-1,3-cyclobutanediol and 15 to less than 49 mole % cyclohexanedimethanol; greater than 51 to 80 mole % 2,2,4,4-tetramethyl-1,3-cyclobutanediol and 20 to less than 49 mole % cyclohexanedimethanol; greater than 51 to 75 mole % 2,2,4,4-tetramethyl-1,3-cyclobutanediol and 25 to less than 49 mole % cyclohexanedimethanol; greater than 51 to 70 mole % 2,2,4,4-tetramethyl-1,3-cyclobutanediol and 30 to less than 49 mole % cyclohexanedimethanol; greater than 51 to 65 mole % 2,2,4,4-tetramethyl-1,3-cyclobutanediol and 35 to less than 49 mole % cyclohexanedimethanol; greater than 51 to 60 mole % 2,2,4,4-tetramethyl-1,3-cyclobutanediol and 40 to less than 49 mole % cyclohexanedimethanol.

In other aspects of the invention, the glycol component includes but is not limited to at least one of the following combinations of ranges: 55 to 99 mole % 2,2,4,4-tetramethyl-1,3-cyclobutanediol and 1 to 45 mole % cyclohexanedimethanol; 55 to 95 mole % 2,2,4,4-tetramethyl-1,3-cyclobutanediol and 5 to 45 mole % cyclohexanedimethanol; 55 to 90 mole % 2,2,4,4-tetramethyl-1,3-cyclobutanediol and 10 to 45 mole % cyclohexanedimethanol; 55 to 85 mole % 2,2,4,4-tetramethyl-1,3-cyclobutanediol and 15 to 45 mole % cyclohexanedimethanol; 55 to 80 mole % 2,2,4,4-tetramethyl-1,3-cyclobutanediol and 20 to 45 mole % cyclohexanedimethanol; 55 to 75 mole % 2,2,4,4-tetramethyl-1,3-cyclobutanediol and 25 to 45 mole % cyclohexanedimethanol; 55 to 70 mole % 2,2,4,4-tetramethyl-1,3-cyclobutanediol and 30 to 45 mole % cyclohexanedimethanol; 55 to 65 mole % 2,2,4,4-tetramethyl-1,3-cyclobutanediol and 35 to 45 mole % cyclohexanedimethanol; and 55 to 60 mole % 2,2,4,4-tetramethyl-1,3-cyclobutanediol and 40 to 45 mole % cyclohexanedimethanol.

In other aspects of the invention, the glycol component includes but is not limited to at least one of the following combinations of ranges: 60 to 99 mole % 2,2,4,4-tetramethyl-1,3-cyclobutanediol and 1 to 40 mole % cyclohexanedimethanol; 60 to 95 mole % 2,2,4,4-tetramethyl-1,3-cyclobutanediol and 5 to 40 mole % cyclohexanedimethanol; 60 to 90 mole % 2,2,4,4-tetramethyl-1,3-cyclobutanediol and 10 to 40 mole % cyclohexanedimethanol; 60 to 85 mole % 2,2,4,4-tetramethyl-1,3-cyclobutanediol and 15 to 40 mole % cyclohexanedimethanol; 60 to 80 mole % 2,2,4,4-tetramethyl-1,3-cyclobutanediol and 20 to 40 mole % cyclohexanedimethanol; 60 to 75 mole % 2,2,4,4-tetramethyl-1,3-cyclobutanediol and 25 to 40 mole % cyclohexanedimethanol; and 60 to 70 mole % 2,2,4,4-tetramethyl-1,3-cyclobutanediol and 30 to 40 mole % cyclohexanedimethanol.

In other aspects of the invention, the glycol component includes but is not limited to at least one of the following combinations of ranges: 65 to 99 mole % 2,2,4,4-tetramethyl-1,3-cyclobutanediol and 1 to 35 mole % cyclohexanedimethanol; 65 to 95 mole % 2,2,4,4-tetramethyl-1,3-cyclobutanediol and 5 to 35 mole % cyclohexanedimethanol; 65 to 90 mole % 2,2,4,4-tetramethyl-1,3-cyclobutanediol and 10 to 35 mole % cyclohexanedimethanol; 65 to 85 mole % 2,2,4,4-tetramethyl-1,3-cyclobutanediol and 15 to 35 mole % cyclohexanedimethanol; 65 to 80 mole % 2,2,4,4-tetramethyl-1,3-cyclobutanediol and 20 to 35 mole % cyclohexanedimethanol; 65 to 75 mole % 2,2,4,4-tetramethyl-1,3-cyclobutanediol and 25 to 35 mole % cyclohexanedimethanol; and 65 to 70 mole % 2,2,4,4-tetramethyl-1,3-cyclobutanediol and 30 to 35 mole % cyclohexanedimethanol.

In other aspects of the invention, the glycol component includes but is not limited to at least one of the following combinations of ranges: 70 to 99 mole % 2,2,4,4-tetramethyl-1,3-cyclobutanediol and 1 to 30 mole % cyclohexanedimethanol; 70 to 95 mole % 2,2,4,4-tetramethyl-1,3-cyclobutanediol and 5 to 30 mole % cyclohexanedimethanol; 70 to 90 mole % 2,2,4,4-tetramethyl-1,3-cyclobutanediol and 10 to 30 mole % cyclohexanedimethanol; 70 to 85 mole % 2,2,4,4-tetramethyl-1,3-cyclobutanediol and 15 to 30 mole % cyclohexanedimethanol; 70 to 80 mole % 2,2,4,4-tetramethyl-1,3-cyclobutanediol and 20 to 30 mole % cyclohexanedimethanol; 70 to 75 mole % 2,2,4,4-tetramethyl-1,3-cyclobutanediol and 25 to 30 mole % cyclohexanedimethanol.

In other aspects of the invention, the glycol component includes but is not limited to at least one of the following combinations of ranges: 75 to 99 mole % 2,2,4,4-tetramethyl-1,3-cyclobutanediol and 1 to 25 mole % cyclohexanedimethanol; 75 to 95 mole % 2,2,4,4-tetramethyl-1,3-cyclobutanediol and 5 to 25 mole % cyclohexanedimethanol; 75 to 90 mole % 2,2,4,4-tetramethyl-1,3-cyclobutanediol and 10 to 25 mole % cyclohexanedimethanol; and 75 to 85 mole % 2,2,4,4-tetramethyl-1,3-cyclobutanediol and 15 to 25 mole % cyclohexanedimethanol.

In other aspects of the invention, the glycol component includes but is not limited to at least one of the following combinations of ranges: 80 to 99 mole % 2,2,4,4-tetramethyl-1,3-cyclobutanediol and 1 to 20 mole % cyclohexanedimethanol; 80 to 95 mole % 2,2,4,4-tetramethyl-1,3-cyclobutanediol and 5 to 20 mole % cyclohexanedimethanol; 80 to 90 mole % 2,2,4,4-tetramethyl-1,3-cyclobutanediol and 10 to 20 mole % cyclohexanedimethanol.

In other aspects of the invention, the glycol component includes but is not limited to at least one of the following combinations of ranges 37 to 80 mole % 2,2,4,4-tetramethyl-1,3-cyclobutanediol and 20 to 63 mole % cyclohexanedimethanol; 40 to less than 45 mole % 2,2,4,4-tetramethyl-1,3-cyclobutanediol and greater than 55 to 60 mole % cyclohexanedimethanol; greater than 45 to 55 mole % 2,2,4,4-tetramethyl-1,3-cyclobutanediol and 45 to less than 55 mole % cyclohexanedimethanol; and 46 to 55 mole % 2,2,4,4-tetramethyl-1,3-cyclobutanediol and 45 to 54 mole % cyclohexanedimethanol; and 46 to 65 mole % 2,2,4,4-tetramethyl-1,3-cyclobutanediol and 35 to 54 mole % cyclohexanedimethanol.

In other aspects of the invention, the glycol component includes but is not limited to at least one of the following combinations of ranges: 0.01 to 15 mole % 2,2,4,4-tetramethyl-1,3-cyclobutanediol and 85 to 99.99 mole % cyclohexanedimethanol; 0.01 to less than 15 mole % 2,2,4,4-tetramethyl-1,3-cyclobutanediol and greater than 85 to 99.99 mole % cyclohexanedimethanol; 0.01 to 14 mole % 2,2,4,4-tetramethyl-1,3-cyclobutanediol and 86 to 99.99 mole % 1,4-cyclohexanedimethanol; 0.01 to 13 mole % 2,2,4,4-tetramethyl-1,3-cyclobutanediol and 87 to 99.99 mole % cyclohexanedimethanol; 0.01 to 12 mole % 2,2,4,4-tetramethyl-1,3-cyclobutanediol and 88 to 99.99 mole % 1,4-cyclohexanedimethano; 0.01 to 11 mole % 2,2,4,4-tetramethyl-1,3-cyclobutanediol and 89 to 99.99 mole % cyclohexanedimethanol; 0.01 to 10 mole % 2,2,4,4-tetramethyl-1,3-cyclobutanediol and 90 to 99.99 mole % cyclohexanedimethanol; 0.01 to less than 10 mole % 2,2,4,4-tetramethyl-1,3-cyclobutanediol and greater than 90 to 99.99 mole % cyclohexanedimethanol; 0.01 to 9 mole % 2,2,4,4-tetramethyl-1,3-cyclobutanediol and 91 to 99.99 mole % cyclohexanedimethanol; 0.01 to 8 mole % 2,2,4,4-tetramethyl-1,3-cyclobutanediol and 92 to 99.99 mole % cyclohexanedimethanol; 0.01 to 7 mole % 2,2,4,4-tetramethyl-1,3-cyclobutanediol and 93 to 99.99 mole % cyclohexanedimethanol; 0.01 to 5 mole % 2,2,4,4-tetramethyl-1,3-cyclobutanediol and 95 to 99.99 mole % cyclohexanedimethanol; 0.01 to less than 5 mole % 2,2,4,4-tetramethyl-1,3-cyclobutanediol and greater than 95 to 99.99 mole % cyclohexanedimethanol; 0.01 to 4.5 mole % 2,2,4,4-tetramethyl-1,3-cyclobutanediol and 95.5 to 99.99 mole % cyclohexanedimethanol; 0.01 to 4 mole % 2,2,4,4-tetramethyl-1,3-cyclobutanediol and 96 to 99.99 mole % cyclohexanedimethanol; 0.01 to 3.5 mole % 2,2,4,4-tetramethyl-1,3-cyclobutanediol and 96.5 to 99.99 mole % cyclohexanedimethanol; 0.01 to 3 mole % 2,2,4,4-tetramethyl-1,3-cyclobutanediol and 97 to 99.99 mole % cyclohexanedimethanol; 0.01 to 2.5 mole % 2,2,4,4-tetramethyl-1,3-cyclobutanediol and 97.5 to 99.99 mole % cyclohexanedimethanol; 0.01 to 2 mole % 2,2,4,4-tetramethyl-1,3-cyclobutanediol and 98 to 99.99 mole % cyclohexanedimethanol; 0.01 to 1.5 mole % 2,2,4,4-tetramethyl-1,3-cyclobutanediol and 98.5 to 99.99 mole % cyclohexanedimethanol; 0.01 to 1 mole % 2,2,4,4-tetramethyl-1,3-cyclobutanediol and 99 to 99.99 mole % cyclohexanedimethanol; and 0.01 to 0.5 mole % 2,2,4,4-tetramethyl-1,3-cyclobutanediol and 99.5 to 99.99 mole % cyclohexanedimethanol.

In other aspects of the invention where the mole percent of 2,2,4,4-tetramethyl-1,3-cyclobutanediol is present at 0.01 to less than 5 mole % based on the mole percentages for the diol component equaling 100 mole % and where the presence of CHDM is optional, the glycol component for the polyesters useful in the invention include but are not limited to at least one or more of the following combinations of ranges: 0.01 to less than 5 mole % of 2,2,4,4-tetramethyl-1,3-cyclobutanediol residues, 0.01 to greater than 95 mole %of ethy-lene glycol residues, and 0 to 99.98 mole % of cyclohexanedimethanol; 0.01 to less than 5 mole % of 2,2,4,4-tetramethyl-1,3-cyclobutanediol residues, 0.01 to greater than 99.98 mole %of ethylene glycol residues, and 0.01 to 99.97 mole % of cyclohexanedimethanol; 0.01 to less than 5 mole % of 2,2,4,4-tetramethyl-1,3-cyclobutanediol residues, 0.01 to greater 90 mole % of ethylene glycol residues, and 5 to 99.98 mole % of cyclohexanedimethanol; 0.01 to less than 5 mole % of 2,2,4,4-tetramethyl-1,3-cyclobutanediol residues, 0.01 to greater than 85 mole %of ethylene glycol residues, and 10 to 99.98 mole % of cyclohexanedimethanol; 0.01 to less than 5 mole % of 2,2,4,4-tetramethyl-1,3-cyclobutanediol residues, 0.01 to greater than 80 mole %of ethylene glycol residues, and 15 to 99.98 mole % of cyclohexanedimethanol; 0.01 to less than 5 mole % of 2,2,4,4-tetramethyl-1,3-cyclobutanediol residues, 0.01 to greater than 75 mole % of ethylene glycol residues, and 20 to 99.98 mole % of cyclohexanedimethanol; 0.01 to less than 5 mole % of 2,2,4,4-tetramethyl-1,3-cyclobutanediol residues, 0.01 to greater than 70 mole % of ethylene glycol residues, and 25 to 99.98 mole % of cyclohexanedimethanol; 0.01 to greater than 65 mole % of ethylene glycol residues, and 30 to 99.98 mole % of cyclohexanedimethanol; 0.01 to less than 5 mole % of 2,2,4,4-tetramethyl-1,3-cyclobutanediol residues, 0.01 to greater than 60 mole % of ethylene glycol residues, and 35 to 99.98 mole % of cyclohexanedimethanol; 0.01 to less than 5 mole % of 2,2,4,4-tetramethyl-1,3-cyclobutanediol residues, 0.01 to greater than 55 mole % of ethylene glycol residues, and 40 to 99.98 mole % of cyclohexanedimethanol; 0.01 to less than 5 mole % of 2,2,4,4-tetramethyl-1,3-cyclobutanediol residues, 0.01 to greater than 50 mole % of ethylene glycol residues, and 45 to 99.98 mole % of cyclohexanedimethanol; 0.01 to less than 5 mole % of 2,2,4,4-tetramethyl-1,3-cyclobutanediol residues, 0.01 to greater than 45 mole % of ethylene glycol residues, and 50 to 99.98 mole % of cyclohexanedimethanol; 0.01 to less 5 mole % of 2,2,4,4-tetramethyl-1,3-cyclobutanediol residues, 0.01 to greater than 40 mole % of ethylene glycol residues, and 55 to 99.98 mole % of cyclohexanedimethanol; 0.01 to less than 5 mole % of 2,2,4,4-tetramethyl-1,3-cyclobutanediol residues, 0.01 to greater than 35 mole % of ethylene glycol residues, and 60 to 99.98 mole % of cyclohexanedimethanol; 0.01 to less than 5 mole % of 2,2,4,4-tetramethyl-1,3-cyclobutanediol residues, 0.01 to greater than 30 mole % of ethylene glycol residues, and 65 to 99.98 mole % of cyclohexanedimethanol; 0.01 to less than 5 mole % of 2,2,4,4-tetramethyl-1,3-cyclobutanediol residues, 0.01 to greater than 25 mole % of ethylene glycol residues, and 70 to 99.98 mole % of cyclohexanedimethanol; 0.01 to less than 5 mole % of 2,2,4,4-tetramethyl-1,3-cyclobutanediol residues, 0.01 to greater than 20 mole % of ethylene glycol residues, and 75 to 99.98 mole % of cyclohexane-dimethanol; 0.01 to less than 5 mole % of 2,2,4,4-tetramethyl-1,3-cyclobutanediol residues, 0.01 to greater than 15 mole % of ethylene glycol residues, and 80 to 99.98 mole % of cyclohexanedimethanol; 0.01 to less than 5 mole % of 2,2,4,4-tetramethyl-1,3-cyclobutanediol residues, 0.01 to greater than 10 mole % of ethylene glycol residues, and 85 to 99.98 mole % of cyclohexanedimethanol; 0.01 to less than 5 mole % of 2,2,4,4-tetramethyl-1,3-cyclobutanediol residues, 0.01 to greater than 5 mole % of ethylene glycol residues, and 90 to 99.98 mole % of cyclohexanedimethanol; 0.01 to less than 5 mole % of 2,2,4,4-tetramethyl-1,3-cyclobutanediol residues, and 0.01 to greater than 5 mole % of ethylene glycol residues, and 90 to 99.98 mole % of cyclohexanedimethanol.

In embodiments where the mole % of 2,2,4,4-tetramethyl-1,3-cyclobutanediol residues, is 0.01 to 5 mole % based on the mole percentages for the diol component equaling 100 mole % and where the presence of CHDM is required, the glycol component for the polyesters useful the invention include but are not limited to at least of the following combinations of ranges: 0.01 to 5 mole % of 2,2,4,4-tetramethyl-1,3-cyclobutanediol residues, 89 to 94.99 mole % of ethylene glycol residues, and 5 to 10 mole % of cyclohexanedimethanol; 0.01 to 5 mole % of 2,2,4,4-tetramethyl-1,3-cyclobutanediol residues, 89 to 94.99 mole % of ethylene glycol residues, and 5 to 10 mole % of cyclohexanedimethanol; 0.01 to 5 mole % of 2,2,4,4-tetramethyl-1,3-cyclobutanediol residues, 84 to 89.99 mole % of ethylene glycol residues, and 10 to 15 mole % of cyclohexanedimethanol; 0.01 to 5 mole % of 2,2,4,4-tetramethyl-1,3-cyclobutanediol residues, 79 to 84.99 mole % of ethylene glycol residues, and 15 to 20 mole % of cyclohexanedimethanol; 0.01 to 5 mole % of 2,2,4,4-tetramethyl-1,3-cyclobutanediol residues, 74 to 79.99 mole % of ethylene glycol residues, and 20 to 25 mole % of cyclohexanedimethanol; 0.01 to 5 mole % of 2,2,4,4-tetramethyl-1,3-cyclobutanediol residues, 69 to 74.99 mole % of ethylene glycol residues, and 25 to 30 mole % of cyclohexanedimethanol; 0.01 to 5 mole % of 2,2,4,4-tetramethyl-1,3-cyclobutanediol residues, 64 to 69.99 mole % of ethylene glycol residues, and 30 to 35 mole % of cyclohexanedimethanol; 0.01 to 5 mole % of 2,2,4,4-tetramethyl-1,3-cyclobutanediol residues, 59 to 64.99 mole % of ethylene glycol residues, and 35 to 40 mole % of cyclohexanedimethanol; 0.01 to 5 mole % of 2,2,4,4-tetramethyl-1,3-cyclobutanediol residues, 54 to 59.99 mole % of ethylene glycol residues, and 40 to 45 mole % of cyclohexanedimethanol; 0.01 to 5 mole % of 2,2,4,4-tetramethyl-1,3-cyclobutanediol residues, 49 to 54.99 mole % of ethylene glycol residues, and 45 to 50 mole % of cyclohexanedimethanol; 0.01 to 5 mole % of 2,2,4,4-tetramethyl-1,3-cyclobutanediol residues, 44 to 49.99 mole % of ethylene glycol residues, and 50 to 55 mole % of cyclohexanedimethanol; 0.01 to 5 mole % of 2,2,4,4-tetramethyl-1,3-cyclobutanediol residues, 39 to 44.99 mole % of ethylene glycol residues, and 55 to 60 mole % of cyclohexanedimethanol; 0.01 to 5 mole % of 2,2,4,4-tetramethyl-1,3-cyclobutanediol residues, 34 to 39.99 mole % of ethylene glycol residues, and 60 to 65 mole % of cyclohexanedimethanol; 0.01 to 5 mole % of 2,2,4,4-tetramethyl-1,3-cyclobutanediol residues, 29 to 34.99 mole % of ethylene glycol residues, and 65 to 70 mole % of cyclohexanedimethanol; 0.01 to 5 mole % of 2,2,4,4-tetramethyl-1,3-cyclobutanediol residues, 24 to 29.99 mole % of ethylene glycol residues, and 70 to 75 mole % of cyclohexanedimethanol; .01 to 5 mole % of 2,2,4,4-tetramethyl-1,3-cyclobutanediol residues, 19 to 24.99 mole % of ethylene glycol residues, and 75 to 80 mole % of cyclohexanedimethanol; 0.01 to 5 mole % of 2,2,4,4-tetramethyl-1,3-cyclobutanediol residues, 14 to 19.99 mole % of ethylene glycol residues, and 80 to 85 mole % of cyclohexanedimethanol; 0.01 to 5 mole % of 2,2,4,4-tetramethyl-1,3-cyclobutanediol residues, 9 to 14.99 mole % of ethylene glycol residues, and 85 to 90 mole % of cyclohexanedimethanol; 0.01 to 5 mole % of 2,2,4,4-tetramethyl-1,3-cyclobutanediol residues, 4 to 9.99 mole % of ethylene glycol residues, and 90 to 95 mole % of cyclohexanedimethanol; 0.01 to 5 mole % of 2,2,4,4-tetramethyl-1,3-cyclobutanediol residues, 95 to 99.99 mole % of ethylene glycol residues, and 0 to 5 mole % of cyclohexanedimethanol;

In embodiments where the mole % of 2,2,4,4-tetramethyl-1,3-cyclobutanediol residues, is 0.01 to 5 mole % based on the mole percentages for the diol component equaling 100 mole % and where the presence of CHDM is required, the glycol component for the polyesters useful the invention can also include embodiments where 0.01 to less than 5 mole % TMCD is present and a corresponding reduction in either cyclohexanedimethanol and/or ethylene glycol residues would be contemplated within the scope of this invention.

The glycol component may also contain one of the following ranges of 2,2,4,4-tetramethyl-1,3-cyclobutanediol residues: 0.01 to 10 mole%; 0.01 to 9.5 mole % 0.01 to 9 mole %; 0.01 to 8.5 mole %; 0.01 to 8 mole %; 0.01 to 7.5 mole %; 0.01 to 7.0; 0.01 to 6.5 mole %; 0.01 to 6 mole %; 0.01 to 5.5 mole %; 0.01 to 5 mole %; 0.01 to less than 5 mole %; 0.01 to 4.5 mole %; 0.01 to 4 mole %; 0.01 to 3.5 mole %; 0.01 to 3 mole %; 0.01 to 2.5 mole %; 0.01 to 2.0 mole %; 0.01 to 2.5 mole %; 0.01 to 2 mole %; 0.01 to 1.5 mole %; 0.01 to 1.0 mole %; and 0.01 to 0.5 mole %.

In certain embodiments, the remainder of the glycol component can include, but is not limited, to any amount of cyclohexanedimethanol and/or ethylene glycol residues so long as the total amount of the glycol component equals 100 mole %.

In addition to the diols set forth above, the polyesters useful in the polyester compositions useful in the invention may be made from 1,3-propanediol, 1,4-butanediol, and mixtures thereof. It is contemplated that compositions of the invention made from 1,3-propanediol, 1,4-butanediol, and mixtures thereof can possess at least one of the Tg ranges described herein, at least one of the inherent viscosity ranges described herein, and/or at least one of the glycol or diacid ranges described herein. In addition or in the alternative, the polyesters made from 1,3-propanediol or 1,4-butanediol and mixtures thereof may also be made from 1,4-cyclohexanedmethanol in at least one of the following amounts: from 0.1 to 99 mole %; 0.1 to 90 mole %; from 0.1 to 80 mole %; from 0.1 to 70 mole %; from 0.1 to 60 mole %; from 0.1 to 50 mole %; from 0.1 to 40 mole %; from 0.1 to 35 mole %; from 0.1 to 30 mole %; from 0.1 to 25 mole %; from 0.1 to 20 mole %; from 0.1 to 15 mole %; from 0.1 to 10 mole %; from 0.1 to 5 mole %; from 1 to 99 mole %; from 1 to 90 mole %; from 1 to 80 mole %; from 1 to 70 mole %; from 1 to 60 mole %; from 1 to 50 mole %; from 1 to 40 mole %; from 1 to 35 mole %; from 1 to 30 mole %; from 1 to 25 mole %; from 1 to 20 mole %; from 1 to 15 mole %; from 1 to 10 mole %; from 1 to 5 mole %; from 5 to 80 mole %; 5 to 70 mole %; from 5 to 60 mole %; from 5 to 50 mole %; from 5 to 40 mole %; from 5 to 35 mole %; from 5 to 30 mole %; from 5 to 25 mole %; from 5 to 20 mole %; and from 5 to 15 mole %; from 5 to 10 mole %; from 10 to 99 mole %; from 10 to 90 mole %; from 10 to 80 mole %; from 10 to 70 mole %; from 10 to 60 mole %; from 10 to 50 mole %; from 10 to 40 mole %; from 10 to 35 mole %; from 10 to 30 mole %; from 10 to 25 mole %; from 10 to 20 mole %; from 10 to 15 mole %; from 20 to 99 mole %; 20 to 95 mole %; from 20 to 80 mole %; from 20 to 70 mole %; from 20 to 60 mole %; from 20 to 50 mole %; from 20 to 40 mole %; from 20 to 35 mole %; from 20 to 30 mole %; and from 20 to 25 mole %.

For the desired polyester, the molar ratio of cis/trans 2,2,4,4-tetramethyl-1,3-cyclobutanediol can vary from the pure form of each and mixtures thereof. In certain embodiments, the molar percentages for cis and/or trans 2,2,4,4,-tetramethyl-1,3-cyclobutanediol are greater than 50 mole % cis and less than 50 mole % trans; or greater than 55 mole % cis and less than 45 mole % trans; or 30 to 70 mole % cis and 70 to 30 mole % trans; or 40 to 60 mole % cis and 60 to 40 mole % trans; or 50 to 70 mole % trans and 50 to 30 mole % cis; or 50 to 70 mole % cis and 50 to 30 mole % trans; or 60 to 70 mole % cis and 30 to 40 mole % trans; or greater than 70 mole % cis and less than 30 mole % trans; wherein the total mole percentages for cis- and trans- 2,2,4,4-tetramethyl-1,3-cyclobutanediol is equal to 100 mole %. In an additional embodiment, the molar ratio of cis/trans 2,2,4,4-tetramethyl-1,3-cyclobutanediol can vary within the range of 50/50 to 0/100, for example, between 40/60 to 20/80.

The cyclohexanedimethanol may be cis, trans, or a mixture thereof, for example, a cis/trans ratio of 60:40 to 40:60 or a cis/trans ratio of 70:30 to 30:70. In another embodiment, the trans-cyclohexanedimethanol can be present in an amount of 60 to 80 mole % and the cis-cyclohexanedimethanol can be present in an amount of 20 to 40 mole % wherein the total percentages of cis-cyclohexanedimethanol and trans-cyclohexanedimethanol is equal to 100 mole %. In particular embodiments, the trans-cyclohexanedimethanol can be present in an amount of 60 mole % and the cis-cyclohexanedimethanol can be present in an amount of 40 mole %. In particular embodiments, the transcyclohexanedimethanol can be present in an amount of 70 mole % and the cis-cyclohexanedimethanol can be present in an amount of 30 mole %. Any of 1,1-, 1,2-, 1,3-, 1,4- isomers of cyclohexanedimethanol or mixtures thereof may be present in the glycol component of this invention. In one embodiment, the polyesters useful in the invention comprise 1,4-cyclohexanedimethanol. In another embodiment, the polyesters useful in the invention comprise 1,4-cyclohexanedimethanol and 1,3-cyclohexanedimethanol. The molar ratio of cis/trans 1,4-cyclohexandimethanol can vary within the range of 50/50 to 0/100, for example, between 40/60 to 20/80.

In one embodiment, the glycol component of the polyester can contain 98 mole % or less of one or more modifying glycols which are not 2,2,4,4-tetramethyl-1,3-cyclobutanediol or cyclohexanedimethanol; in one embodiment, the glycol component of the polyester portion of the polyester compositions useful in the invention can contain 50 to 98 mole % of one or more modifying glycols which are not 2,2,4,4-tetramethyl-1,3-cyclobutanediol or cyclohexanedimethanol; in one embodiment, the glycol component of the polyester portion of the polyester compositions useful in the invention can contain 25 mole % or less of one or more modifying glycols which are not 2,2,4,4-tetramethyl-1,3-cyclobutanediol or cyclohexanedimethanol; in one embodiment, the glycol component of the polyester portion of the polyester compositions useful in the invention can contain 20 mole % or less of one or more modifying glycols which are not 2,2,4,4-tetramethyl-1,3-cyclobutanediol or cyclohexanedimethanol; in one embodiment, the polyesters useful in the invention may contain less than 15 mole % or of one or more modifying glycols. In another embodiment, the polyesters useful in the invention can contain 10 mole % or less of one or more modifying glycols. In another embodiment, the polyesters useful in the invention can contain 5 mole % or less of one or more modifying glycols. In another embodiment, the polyesters useful in the invention can contain 3 mole % or less of one or more modifying glycols. In another embodiment, the polyesters useful in the invention can contain 0 mole % modifying glycols. Certain embodiments can also contain 0.01 to 98 mole %, such as 0.1 to 98 mole %, 1 to 98 mole %, 5 to 98 mole %, or 10 to 98 mole % of one or more modifying glycols.

Modifying glycols useful in the polyesters useful in the invention refer to diols other than 2,2,4,4-tetramethyl-1,3-cyclobutanediol and cyclohexanedimethanol and can contain 2 to 16 carbon atoms. Examples of suitable modifying glycols include, but are not limited to, ethylene glycol residues, 1,2-propanediol, 1,3-propanediol, neopentyl glycol, 1,4-butanediol, 1,5-pentanediol, 1,6-hexanediol, p-xylene glycol, polytetramethylene glycol, and mixtures thereof. In one embodiment, the modifying glycol is ethylene glycol. In another embodiment, the modifying glycols include, but are not limited to, at least one of 1,3-propanediol and 1,4-butanediol.

The polyesters can comprise from 0 to 10 mole percent, for example, from 0.01 to 5 mole percent, from 0.01 to 1 mole percent, from 0.05 to 5 mole percent, from 0.05 to 1 mole percent, or from 0.1 to 0.7 mole percent, based the total mole percentages of either the diol or diacid residues; respectively, of one or more residues of a branching monomer, also referred to herein as a branching agent, having 3 or more carboxyl substituents, hydroxyl substituents, or a combination thereof. In certain embodiments, the branching monomer or agent may be added prior to and/or during and/or after the polymerization of the polyester. The polyester(s) useful in the invention can thus be linear or branched.

Examples of branching monomers include, but are not limited to, multifunctional acids or multifunctional alcohols such as trimellitic acid, trimellitic anhydride, pyromellitic dianhydride, trimethylolpropane, glycerol, pentaerythritol, citric acid, tartaric acid, 3-hydroxyglutaric acid and the like. In one embodiment, the branching monomer residues can comprise 0.1 to 0.7 mole percent of one or more residues chosen from at least one of the following: trimellitic anhydride, pyromellitic dianhydride, glycerol, sorbitol, 1,2,6-hexanetriol, pentaerythritol, trimethylolethane, and/or trimesic acid. The branching monomer may be added to the polyester reaction mixture or blended with the polyester in the form of a concentrate as described, for example, in U.S. Patent Nos. 5,654,347 and 5,696,176, whose disclosure regarding branching monomers is incorporated herein by reference.

The polyesters of the invention can comprise at least one chain extender. Suitable chain extenders include, but are not limited to, multifunctional (including, but not limited to, bifunctional) isocyanates, multifunctional epoxides, including for example epoxylated novolacs, and phenoxy resins. In certain embodiments, chain extenders may be added at the end of the polymerization process or after the polymerization process. If added after the polymerization process, chain extenders can be incorporated by compounding or by addition during conversion processes such as injection molding or extrusion. The amount of chain extender used can vary depending on the specific monomer composition used and the physical properties desired but is generally about 0.1 percent by weight to about 10 percent by weight, such as about 0.1 to about 5 percent by weight, based on the total weight of the polyester.

When tin is added to the polyesters and/or polyester compositions and/or process of making the polyesters of the invention, it is added to the process of making the polyester in the form of a tin compound. The amount of the tin compound added to the polyesters of the invention and/or polyester compositions of the invention and/or processes of the invention can be measured in the form of tin atoms present in the final polyester, for example, by weight measured in ppm

When phosphorus is added to to the polyesters and/or polyester compositions and/or process of making the polyesters of the invention, it is added to the process of making the polyester in the form of a phosphorus compound. In one embodiment, this phosphorus compound can comprise at least one phosphate ester(s). The amount of phosphorus compound, for example, phosphate ester(s), added to the polyesters of the invention and/or polyester compositions of the invention and/or processes of the invention can be measured in the form of phosphorus atoms present in the final polyester, for example, by weight measured in ppm.

In one embodiment, the thermal stabilizer(s) useful in the invention can be an organic compound such as, for example, a phosphorus acid ester containing halogenated or non-halogenated organic substituents. The thermal stabilizer can comprise a wide range of phosphorus compounds well-known in the art such as, for example, phosphines, phosphites, phosphinites, phosphonites, phosphinates, phosphonates, phosphine oxides, and phosphates. Examples of thermal stabilizers include tributyl phosphate, triethyl phosphate, tri-butoxyethyl phosphate, t-butylphenyl diphenyl phosphate, 2-ethylhexyl diphenyl phosphate, ethyl dimethyl phosphate, isodecyl diphenyl phosphate, trilauryl phosphate, triphenyl phosphate, tricresyl phosphate, trixylenyl phosphate, t-butylphenyl diphenylphosphate, resorcinol bis(diphenyl phosphate), tribenzyl phosphate, phenyl ethyl phosphate, trimethyl thionophosphate, phenyl ethyl thionophosphate, dimethyl methylphosphonate, diethyl methylphosphonate, diethyl pentylphosphonate, dilauryl methylphosphonate, diphenyl methylphosphonate, dibenzyl methylphosphonate, diphenyl cresylphosphonate, dimethyl cresylphosphonate, dimethyl methylthionophosphonate, phenyl diphenylphosphinate, benzyl diphenylphosphinate, methyl diphenylphosphinate, trimethyl phosphine oxide, triphenyl phosphine oxide, tribenzyl phosphine oxide, 4-methyl diphenyl phosphine oxide, triethyl phosphite, tributyl phosphite, trilauryl phosphite, triphenyl phosphite, tribenzyl phosphite, phenyl diethyl phosphite, phenyl dimethyl phosphite, benzyl dimethyl phosphite, dimethyl methylphosphonite, diethyl pentylphosphonite, diphenyl methylphosphonite, dibenzyl methylphosphonite, dimethyl cresylphosphonite, methyl dimethylphosphinite, methyl diethylphosphinite, phenyl diphenylphosphinite, methyl diphenylphosphinite, benzyl diphenylphosphinite, triphenyl phosphine, tribenzyl phosphine, and methyl diphenyl phosphine. In one embodiment, triphenyl phosphine oxide is excluded as a thermal stabilizer in the process(es) of making the polyesters useful in the invention and/or in the polyester composition(s) of the invention.

In one embodiment, thermal stabilizers useful in the invention can be any of the previously described phosphorus-based acids wherein one or more of the hydrogen atoms of the acid compound (bonded to either oxygen or phosphorus atoms) are replaced with alkyl, branched alkyl, substituted alkyl, alkyl ethers, substituted alkyl ethers, alkyl-aryl, alkyl-substituted aryl, aryl, substituted aryl, and mixtures thereof. In another embodiment, thermal stabilizers useful in the invention, include but are not limited to, the above described compounds wherein at least one of the hydrogen atoms bonded to an oxygen atom of the compound is replaced with a metallic ion or an ammonium ion.

The esters can contain alkyl, branched alkyl, substituted alkyl, alkyl ethers, aryl, and/or substituted aryl groups. The esters can also have at least one alkyl group and at least one aryl group. The number of ester groups present in the particular phosphorus compound can vary from zero up to the maximum allowable based on the number of hydroxyl groups present on the phosphorus compound used. For example, an alkyl phosphate ester can include one or more of the mono-, di-, and tri alkyl phosphate esters; an aryl phosphate ester includes one or more of the mono-, di-, and tri aryl phosphate esters; and an alkyl phosphate ester and/or an aryl phosphate ester also include, but are not limited to, mixed alkyl aryl phosphate esters having at least one alkyl and one aryl group.

In one embodiment, the thermal stabilizers useful in the invention include but are not limited to alkyl, aryl or mixed alkyl aryl esters or partial esters of phosphoric acid, phosphorus acid, phosphinic acid, phosphonic acid, or phosphonous acid. The alkyl or aryl groups can contain one or more substituents.

In one aspect, the phosphorus compounds useful in the invention comprise at least one thermal stabilizer chosen from at least one of substituted or unsubstituted alkyl phosphate esters, substituted or unsubstituted aryl phosphate esters, substituted or unsubstituted mixed alkyl aryl phosphate esters, diphosphites, salts of phosphoric acid, phosphine oxides, and mixed aryl alkyl phosphites, reaction products thereof, and mixtures thereof. The phosphate esters include esters in which the phosphoric acid is fully esterified or only partially esterified.

In one embodiment, for example, the thermal stabilizers useful in the invention can include at least one phosphate ester.

In one aspect, the phosphorus compounds useful in the invention comprise at least one thermal stabilizer chosen from at least one of substituted or unsubstituted alkyl phosphate esters, substituted or unsubstituted aryl phosphate esters, mixed substituted or unsubstituted alkyl aryl phosphate esters, reaction products thereof, and mixtures thereof. The phosphate esters include esters in which the phosphoric acid is fully esterified or only partially esterified.

In one embodiment, for example, the thermal stabilizers useful in the invention can include at least one phosphate ester.

In another embodiment, the phosphate esters useful in the invention can include but are not limited to alkyl phosphate esters, aryl phosphate esters, mixed alkyl aryl phosphate esters, and/or mixtures thereof.

In certain embodiments, the phosphate esters useful in the invention are those where the groups on the phosphate ester include are alkyl, alkoxy-alkyl, phenyl, or substituted phenyl groups. These phosphate esters are generally referred to herein as alkyl and/or aryl phosphate esters. Certain preferred embodiments include trialkyl phosphates, triaryl phosphates, alkyl diaryl phosphates, dialkyl aryl phosphates, and mixtures of such phosphates, wherein the alkyl groups are preferably those containing from 2 to 12 carbon atoms, and the aryl groups are preferably phenyl.

Representative alkyl and branched alkyl groups are preferably those containing from 1-12 carbon atoms, including, but not limited to, ethyl, propyl, isopropyl, butyl, hexyl, cyclohexyl, 2-ethylhexyl, octyl, decyl and dodecyl. Substituted alkyl groups include, but are not limited to, those containing at least one of carboxylic acid groups and esters thereof, hydroxyl groups, amino groups, keto groups, and the like.

Representative of alkyl-aryl and substituted alkyl-aryl groups are those wherein the alkyl portion contains from 1-12 carbon atoms, and the aryl group is phenyl or substituted phenyl wherein groups such as alkyl, branched alkyl, aryl, hydroxyl, and the like are substituted for hydrogen at any carbon position on the phenyl ring. Preferred aryl groups include phenyl or substituted phenyl wherein groups such as alkyl, branched alkyl, aryl, hydroxyl and the like are substituted for hydrogen at any position on the phenyl ring.

In one embodiment, the phosphate esters useful as thermal stabilizers in the invention include but are not limited to dibutylphenyl phosphate, triphenyl phosphate, tricresyl phosphate, tributyl phosphate, tri-2-ethylhexyl phosphate, trioctyl phosphate, and/or mixtures thereof, including particularly mixtures of tributyl phosphate and tricresyl phosphate, and mixtures of isocetyl diphenyl phosphate and 2-ethylhexyl diphenyl phosphate.

In one embodiment, the phosphate esters useful as thermal stabilizers in the invention include but are not limited to, at least one of the following: trialkyl phosphates, triaryl phosphates, alkyl diaryl phosphates, and mixed alkyl aryl phosphates.

In one embodiment, the phosphate esters useful as thermal stabilizers in the invention include but are not limited to, at least one of the following: triaryl phosphates, alkyl diaryl phosphates, and mixed alkyl aryl phosphates.

In one embodiment, at least one thermal stabilizer useful in the invention comprises, but is not limited to, triaryl phosphates, such as, for example, triphenyl phosphate. In one embodiment, at least one one thermal stabilizer comprises, but is not limited to Merpol A. In one embodiment, at least one thermal stabilizer useful in the invention comprises, but is not limited to, at least one of triphenyl phosphate and Merpol A. Merpol A is a phosphate ester commercially available from Stagean Chemical Co and/or E.I. duPont de Nemours & Co. The CAS Registry number for Merpol A is believed to be CAS Registry # 37208-27-8.

In one embodiment, the polyester compositions and/or processes of the invention may comprise 2-ethylhexyl diphenyl phosphate.

The term "thermal stabilizer" is intended to include the reaction product(s) thereof. The term "reaction product" as used in connection with the thermal stabilizers of the invention refers to any product of a polycondensation or esterification reaction between the thermal stabilizer and any of the monomers used in making the polyester as well as the product of a polycondensation or esterification reaction between the catalyst and any other type of additive.

When phosphorus is added to the polyesters and/or polyester compositions and/or process of making the polyesters of the invention, it is added in the form of a phosphorus compound, for example, at least one phosphate ester(s). The amount of phosphorus compound(s), (for example, at least one phosphate ester), is added to the polyesters of the invention and/or polyester compositions of the invention and/or processes of the invention can be measured in the form of phosphorus atoms present in the final polyester, for example, by weight measured in ppm.

Amounts of thermal stabilizer added during polymerization or post manufacturing can include but are not limited to: 1 to 5000 ppm; 1 to 1000 ppm, 1 to 900 ppm, 1 to 800 ppm, 1 to 700 ppm. 1 to 600 ppm, 1 to 500 ppm, 1 to 400 ppm, 1 to 350 ppm, 1 to 300 ppm, 1 to 250 ppm, 1 to 200 ppm, 1 to 150 ppm, 1 to 100 ppm;10 to 5000 ppm; 10 to 1000 ppm, 10 to 900 ppm, 10 to 800 ppm, 10 to 700 ppm. 10 to 600 ppm, 10 to 500 ppm, 10 to 400 ppm, 10 to 350 ppm, 10 to 300 ppm, 10 to 250 ppm, 10 to 200 ppm, 10 to 150 ppm, 10 to 100 ppm; based on the total weight of the polyester composition.

In addition, the polyesters may also contain from 0.01 to 25 % by weight of the overall composition common additives such as colorants, dyes, mold release agents, flame retardants, plasticizers, nucleating agents, stabilizers, including but not limited to, UV stabilizers, thermal stabilizers and/or reaction products thereof, fillers, and impact modifiers. Examples of typical commercially available impact modifiers well known in the art and useful in this invention include, but are not limited to, ethylene/propylene terpolymers, functionalized polyolefins such as those containing methyl acrylate and/or glycidyl methacrylate, styrene-based block copolymeric impact modifiers, and various acrylic core/shell type impact modifiers. Residues of such additives are also contemplated as part of the polyester composition.

Reinforcing materials may also be introduced into the polyesters according to the invention. The reinforcing materials may include, but are not limited to, carbon filaments, silicates, mica, clay, talc, titanium dioxide, Wollastonite, glass flakes, glass beads and fibers, and polymeric fibers and combinations thereof. In one embodiment, the reinforcing materials include glass, such as, fibrous glass filaments, mixtures of glass and talc, glass and mica, and glass and polymeric fibers.

Catalyst amounts can range from 10 ppm to 20,000 ppm or 10 to10,000 ppm, or 10 to 5000 ppm or 10 to 1000 ppm or 10 to 500 ppm, or 10 to 300 ppm or 10 to 250 ppm based on the catalyst metal and based on the weight of the final polymer.

In one embodiment, the catalyst is a tin compound. In one embodiment, the tin compound can be used in either the esterification reaction or the polycondensation reaction or both reactions. In another embodiment, the catalyst is solely a tin compound useful in the polyesters useful in the invention and/or the processes of making the polyesters of the invention. In one embodiment, the catalyst comprises a tin compound used in the esterification reaction. Generally, in one embodiment, the tin compound catalyst is used in amounts of from about 0.005 % to about 0.2 % based on the weight of the dicarboxylic acid or dicarboxylic acid ester. Generally, in one embodiment, less than about 700 ppm elemental tin based on polyester weight should be present as residue in the polyester based on the total weight of the polyester.

When tin is added to the polyesters and/or polyester compositions and/or process of making the polyesters of the invention, it is added to the process of making the polyester in the form of a tin compound. The amount of the tin compound added to the polyesters of the invention and/or polyester compositions of the invention and/or processes of the invention can be measured in the form of tin atoms present in the final polyester, for example, by weight measured in ppm.

In one embodiment, the polyesters according to the invention are visually clear. The term "visually clear" is defined herein as an appreciable absence of cloudiness, haziness, and/or muddiness, when inspected visually.

In other aspects of the invention, the glass transition temperature Tg of the polyesters useful in the polyester compositions of the invention can be at least one of the following ranges: 60 to 200 °C; 60 to 190 °C; 60 to 180 °C; 60 to 170 °C; 60 to 160 °C; 60 to 155 °C; 60 to 150 °C; 60 to 145 °C; 60 to 140 °C; 60 to 138 °C; 60 to 135 °C; 60 to 130 °C; 60 to 125 °C; 60 to 120 °C; 60 to 115 °C; 60 to 110 °C; 60 to 105 °C; 60 to 100 °C; 60 to 95 °C; 60 to 90 °C; 60 to 85 °C; 60 to 80 °C; 60 to 75 °C; 65 to 200 °C; 65 to 190 °C; 65 to 180 °C; 65 to 170 °C; 65 to 160 °C; 65 to 155 °C; 65 to 150 °C; 65 to 145 °C; 65 to 140 °C; 65 to 138 °C; 65 to 135 °C; 65 to 130 °C; 65 to 125°C; 65 to 120°C; 65 to 115°C; 65 to 110°C; 65 to 105°C; 65 to 100°C; 65 to 95°C; 65 to 90°C; 65 to 85°C; 65 to 80°C; 65 to 75°C; 70 to 200°C; 70 to 190°C; 70 to 180°C; 70 to 170°C; 70 to 160°C; 70 to 155°C; 70 to 150°C; 70 to 145°C; 70 to 140°C; 70 to 138°C; 70 to 135°C; 70 to 130°C; 70 to 125°C; 70 to 120°C; 70 to 115°C; 70 to 110°C; 70 to 105°C; 70 to 100°C; 70 to 95°C; 70 to 90°C; 70 to 85°C; 70 to 80°C; 70 to 75°C; 75 to 200°C; 75 to 190°C; 75 to 180°C; 75 to 170°C; 75 to 160°C; 75 to 155°C; 75 to 150°C; 75 to 145°C; 75 to 140°C; 75 to 138°C; 75 to 135°C; 75 to 130°C; 75 to 125°C; 75 to 120°C; 75 to 115°C; 75 to 110°C; 75 to 105°C; 75 to 100°C; 75 to 95°C; 75 to 90°C; 75 to 85°C; 75 to 80°C; 80 to 200°C; 80 to 190°C; 80 to 180°C; 80 to 170°C; 80 to 160°C; 80 to 155°C; 80 to 150°C; 80 to 145°C; 80 to 140°C; 80 to 138°C; 80 to 135°C; 80 to 130°C; 80 to 125°C; 80 to 120°C; 80 to 115°C; 80 to 110°C; 80 to 105°C; 80 to 100°C; 80 to 95°C; 80 to 90°C; 80 to 85°C; 85 to 200°C; 85 to 190°C; 85 to 180°C; 85 to 170°C; 85 to 160°C; 85 to 155°C; 85 to 150°C; 85 to 145°C; 85 to 140°C; 85 to 138°C; 85 to 135°C; 85 to 130°C; 85 to 125°C; 85 to 120°C; 85 to 115°C; 85 to 110°C; 85 to 105°C; 85 to 100°C; 85 to 95°C; 85 to 90°C; 90 to 200°C; 90 to 190°C; 90 to 180°C; 90 to 170°C; 90 to 160°C; 90 to 155°C; 90 to 150°C; 90 to 145°C; 90 to 140°C; 90 to 138°C; 90 to 135°C; 90 to 130°C; 90 to 125°C; 90 to 120°C; 90 to 115°C; 90 to 110°C; 90 to 105°C; 90 to 100°C; 90 to 95°C; 95 to 200°C; 95 to 190°C; 95 to 180°C; 95 to 170°C; 95 to 160°C; 95 to 155°C; 95 to 150°C; 95 to 145°C; 95 to 140°C; 95 to 138°C; 95 to 135°C; 95 to 130°C; 95 to 125°C; 95 to 120°C; 95 to 115°C; 95 to 110°C; 95 to 105°C; 95 to 100°C; 100 to 200°C; 100 to 190°C; 100 to 180°C; 100 to 170°C; 100 to 160°C; 100 to 155°C; 100 to 150°C; 100 to 145°C; 100 to 140°C; 100 to 138°C; 100 to 135°C; 100 to 130°C; 100 to 125°C; 100 to 120°C; 100 to 115°C; 100 to 110°C; 105 to 200°C; 105 to 190°C; 105 to 180°C; 105 to 170°C; 105 to 160°C; 105 to 155°C; 105 to 150°C; 105 to 145°C; 105 to 140°C; 105 to 138°C; 105 to 135°C; 105 to 130°C; 105 to 125°C; 105 to 120°C; 105 to 115°C; 105 to 110°C; 110 to 200°C; 110 to 190°C; 110 to 180°C; 110 to 170°C; 110 to 160°C; 110 to 155°C; 110 to 150°C; 110 to 145°C; 110 to 140°C; 110 to 138°C; 110 to 135°C; 110 to 130°C; 110 to 125°C; 110 to 120°C; 110 to 115°C; 115 to 200°C; 115 to 190°C; 115 to 180°C; 115 to 170°C; 115 to 160°C; 115 to 155°C; 115 to 150°C; 115 to 145°C; 115 to 140°C; 115 to 138°C; 115 to 135°C; 110 to 130°C; 115 to 125°C; 115 to 120°C; 120 to 200°C; 120 to 190°C; 120 to 180°C; 120 to 170°C; 120 to 160°C; 120 to 155°C; 120 to 150°C; 120 to 145°C; 120 to 140°C; 120 to 138°C; 120 to 135°C; 120 to 130°C; 125 to 200°C; 125 to 190°C; 125 to 180°C; 125 to 170°C; 125 to 165°C; 125 to 160°C; 125 to 155°C; 125 to 150°C; 125 to 145°C; 125 to 140°C; 125 to 138°C; 125 to 135°C; 127 to 200°C; 127 to 190°C; 127 to 180°C; 127 to 170°C; 127 to 160°C; 127 to 150°C; 127 to 145°C; 127 to 140°C; 127 to 138°C; 127 to 135°C; 130 to 200°C; 130 to 190°C; 130 to 180°C; 130 to 170°C; 130 to 160°C; 130 to 155°C; 130 to 150°C; 130 to 145°C; 130 to 140°C; 130 to 138°C; 130 to 135°C; 135 to 200°C; 135 to 190°C; 135 to 180°C; 135 to 170°C; 135 to 160°C; 135 to 155°C; 135 to 150°C; 135 to 145°C; 135 to 140°C; 140 to 200°C; 140 to 190°C; 140 to 180°C; 140 to 170°C; 140 to 160°C; 140 to 155°C; 140 to 150°C; 140 to 145°C; 148 to 200°C; 148 to 190°C; 148 to 180°C; 148 to 170°C; 148 to 160°C; 148 to 155°C; 148 to 150°C; greater than 148 to 200°C; greater than 148 to 190°C; greater than 148 to 180°C; greater than 148 to 170°C; greater than 148 to 160°C; greater than 148 to 155°C; 150 to 200°C; 150 to 190°C; 150 to 180°C; 150 to 170°C; 150 to 160; 155 to 190°C; 155 to 180°C; 155 to 170°C; and 155 to 165°C.

For embodiments of the invention, the polyesters useful in the invention may exhibit at least one of the following inherent viscosities as determined in 60/40 (wt/wt) phenol/tetrachloroethane at a concentration of 0.25 g/50 ml at 25°C: 0.10 to 1.2 dUg; 0.10 to 1.1 dUg; 0.10 to 1 dUg; 0.10 to less than 1 dUg; 0.10 to 0.98 dUg; 0.10 to 0.95 dUg; 0.10 to 0.90 dUg; 0.10 to 0.85 dUg; 0.10 to 0.80 dUg; 0.10 to 0.75 dUg; 0.10 to less than 0.75 dUg; 0.10 to 0.72 dUg; 0.10 to 0.70 dUg; 0.10 to less than 0.70 dUg; 0.10 to 0.68 dUg; 0.10 to less than 0.68 dUg; 0.10 to 0.65 dUg; 0.10 to 0.6 dUg; 0.10 to 0.55 dUg; 0.10 to 0.5 dUg; 0.10 to 0.4 dUg; 0.10 to 0.35 dUg; 0.20 to 1.2 dUg; 0.20 to 1.1 dUg; 0.20 to 1 dUg; 0.20 to less than 1 dUg; 0.20 to 0.98 dUg; 0.20 to 0.95 dUg; 0.20 to 0.90 dUg; 0.20 to 0.85 dUg; 0.20 to 0.80 dUg; 0.20 to 0.75 dUg; 0.20 to less than 0.75 dUg; 0.20 to 0.72 dUg; 0.20 to 0.70 dUg; 0.20 to less than 0.70 dUg; 0.20 to 0.68 dUg; 0.20 to less than 0.68 dUg; 0.20 to 0.65 dUg; 0.20 to 0.6 dUg; 0.20 to 0.55 dUg; 0.20 to 0.5 dUg; 0.20 to 0.4 dUg; 0.20 to 0.35 dUg; 0.35 to 1.2 dUg; 0.35 to 1.1 dUg; 0.35 to 1 dUg; 0.35 to less than 1 dUg; 0.35 to 0.98 dUg; 0.35 to 0.95 dUg; 0.35 to 0.90 dUg; 0.35 to 0.85 dUg; 0.35 to 0.80 dUg; 0.35 to 0.75 dUg; 0.35 to less than 0.75 dUg; 0.35 to 0.72 dUg; 0.35 to 0.70 dUg; 0.35 to less than 0.70 dUg; 0.35 to 0.68 dUg; 0.35 to less than 0.68 dUg; 0.35 to 0.65 dUg; 0.40 to 1.2 dUg; 0.40 to 1.1 dUg; 0.40 to 1 dUg; 0.40 to less than 1 dUg; 0.40 to 0.98 dUg; 0.40 to 0.95 dUg; 0.40 to 0.90 dUg; 0.40 to 0.85 dUg; 0.40 to 0.80 dUg; 0.40 to 0.75 dUg; 0.40 to less than 0.75 dUg; 0.40 to 0.72 dUg; 0.40 to 0.70 dUg; 0.40 to less than 0.70 dUg; 0.40 to 0.68 dUg; 0.40 to less than 0.68 dUg; 0.40 to 0.65 dUg; greater than 0.42 to 1.2 dUg; greater than 0.42 to 1.1 dUg; greater than 0.42 to 1 dUg; greater than 0.42 to less than 1 dUg; greater than 0.42 to 0.98 dUg; greater than 0.42 to 0.95 dUg; greater than 0.42 to 0.90 dUg; greater than 0.42 to 0.85 dUg; greater than 0.42 to 0.80 dUg; greater than 0.42 to 0.75 dUg; greater than 0.42 to less than 0.75 dUg; greater than 0.42 to 0.72 dL/g; greater than 0.42 to 0.70 dUg; greater than 0.42 to less than 0.70 dUg; greater than 0.42 to 0.68 dUg; greater than 0.42 to less than 0.68 dUg; and greater than 0.42 to 0.65 dUg.

For embodiments of the invention, the polyesters useful in the invention may exhibit at least one of the following inherent viscosities as determined in 60/40 (wt/wt) phenol/ tetrachloroethane at a concentration of 0.25 g/50 ml at 25°C: 0.45 to 1.2 dUg; 0.45 to 1.1 dUg; 0.45 to 1 dUg; 0.45 to 0.98 dUg; 0.45 to 0.95 dUg; 0.45 to 0.90 dUg; 0.45 to 0.85 dUg; 0.45 to 0.80 dUg; 0.45 to 0.75 dUg; 0.45 to less than 0.75 dUg; 0.45 to 0.72 dUg; 0.45 to 0.70 dUg; 0.45 to less than 0.70 dUg; 0.45 to 0.68 dUg; 0.45 to less than 0.68 dUg; 0.45 to 0.65 dUg; 0.50 to 1.2 dUg; 0.50 to 1.1 dUg; 0.50 to 1 dUg; 0.50 to less than 1 dUg; 0.50 to 0.98 dUg; 0.50 to 0.95 dUg; 0.50 to 0.90 dUg; 0.50 to 0.85 dUg; 0.50 to 0.80 dUg; 0.50 to 0.75 dUg; 0.50 to less than 0.75 dUg; 0.50 to 0.72 dUg; 0.50 to 0.70 dUg; 0.50 to less than 0.70 dUg; 0.50 to 0.68 dUg; 0.50 to less than 0.68 dUg; 0.50 to 0.65 dL/g; 0.55 to 1.2 dUg; 0.55 to 1.1 dUg; 0.55 to 1 dUg; 0.55 to less than 1 dUg; 0.55 to 0.98 dUg; 0.55 to 0.95 dUg; 0.55 to 0.90 dUg; 0.55 to 0.85 dUg; 0.55 to 0.80 dUg; 0.55 to 0.75 dUg; 0.55 to less than 0.75 dUg; 0.55 to 0.72 dUg; 0.55 to 0.70 dUg; 0.55 to less than 0.70 dUg; 0.55 to 0.68 dUg; 0.55 to less than 0.68 dL/g; 0.55 to 0.65 dUg; 0.58 to 1.2 dUg; 0.58 to 1.1 dUg; 0.58 to 1 dUg; 0.58 to less than 1 dUg; 0.58 to 0.98 dUg; 0.58 to 0.95 dUg; 0.58 to 0.90 dUg; 0.58 to 0.85 dUg; 0.58 to 0.80 dUg; 0.58 to 0.75 dUg; 0.58 to less than 0.75 dUg; 0.58 to 0.72 dUg; 0.58 to 0.70 dUg; 0.58 to less than 0.70 dUg; 0.58 to 0.68 dUg; 0.58 to less than 0.68 dUg; 0.58 to 0.65 dUg; 0.60 to 1.2 dUg; 0.60 to 1.1 dUg; 0.60 to 1 dUg; 0.60 to less than 1 dUg; 0.60 to 0.98 dUg; 0.60 to 0.95 dUg; 0.60 to 0.90 dUg; 0.60 to 0.85 dUg; 0.60 to 0.80 dL/g; 0.60 to 0.75 dUg; 0.60 to less than 0.75 dUg; 0.60 to 0.72 dUg; 0.60 to 0.70 dUg; 0.60 to less than 0.70 dUg; 0.60 to 0.68 dUg; 0.60 to less than 0.68 dUg; 0.60 to 0.65 dUg; 0.65 to 1.2 dUg; 0.65 to 1.1 dUg; 0.65 to 1 dUg; 0.65 to less than 1 dUg; 0.65 to 0.98 dUg; 0.65 to 0.95 dUg; 0.65 to 0.90 dUg; 0.65 to 0.85 dUg; 0.65 to 0.80 dUg; 0.65 to 0.75 dUg; 0.65 to less than 0.75 dUg; 0.65 to 0.72 dUg; 0.65 to 0.70 dUg; 0.65 to less than 0.70 dUg; 0.68 to 1.2 dUg; 0.68 to 1.1 dUg; 0.68 to 1 dUg; 0.68 to less than 1 dUg; 0.68 to 0.98 dUg; 0.68 to 0.95 dUg; 0.68 to 0.90 dUg; 0.68 to 0.85 dUg; 0.68 to 0.80 dUg; 0.68 to 0.75 dUg; 0.68 to less than 0.75 dL/g; 0.68 to 0.72 dUg; greater than 0.76 dUg to 1.2 dL/g; greater than 0.76 dUg to 1.1 dUg; greater than 0.76 dUg to 1 dUg; greater than 0.76 dUg to less than 1 dUg; greater than 0.76 dUg to 0.98dL/g; greater than 0.76 dL/g to 0.95 dUg; greater than 0.76 dL/g to 0.90 dUg; greater than 0.80 dUg to 1.2 dUg; greater than 0.80 dUg to 1.1 dUg; greater than 0.80 dUg to 1 dUg; greater than 0.80 dUg to less than 1 dUg; greater than 0.80 dUg to 1.2 dUg; greater than 0.80 dUg to 0.98dL/g; greater than 0.80 dUg to 0.95 dUg; greater than 0.80 dUg to 0.90 dUg.

It is contemplated that compositions useful in the invention can possess at least one of the inherent viscosity ranges described herein and at least one of the monomer ranges for the compositions described herein unless otherwise stated. It is also contemplated that compositions useful in the invention can possess at least one of the Tg ranges described herein and at least one of the monomer ranges for the compositions described herein unless otherwise stated. It is also contemplated that compositions useful in the invention can possess at least one of the inherent viscosity ranges described herein, at least one of the Tg ranges described herein, and at least one of the monomer ranges for the compositions described herein unless otherwise stated.

In still another aspect, the invention relates to the use of a silicon-containing compound in the manufacture of a polyester as claimed comprising:
(a) a dicarboxylic acid component comprising:
   (i) terephthalic acid residues; and
(b) a glycol component;
for increasing the inherent viscosity of said polyester.

In still another aspect, the invention relates to the use of a silicon-containing compound in the manufacture of a polyester as claimed comprising:
(a) a dicarboxylic acid component comprising:
   (i) terephthalic acid residues; and
(b) a glycol component;
for increasing the inherent viscosity of said polyester compared to an otherwise similar polyester that does not contain said silicon-containing compound.

In one embodiment, the polyester contains no polycarbonate.

### Examples

### Measurement Methods

The inherent viscosity of the polyesters was determined in 60/40 (wt/wt) phenol/tetrachloroethane at a concentration of 0.25 g/50 ml at 25 °C, and is reported in dUg.

Unless stated otherwise, the glass transition temperature (T_{g}) was determined using a TA DSC 2920 instrument from Thermal Analyst Instruments at a scan rate of 20 °C/min according to ASTM D3418.

The glycol content and the cis/trans ratio of the compositions were determined by proton nuclear magnetic resonance (NMR) spectroscopy. All NMR spectra were recorded on a JEOL Eclipse Plus 600 MHz nuclear magnetic resonance spectrometer using either chloroform-trifluoroacetic acid (70-30 volume/volume) for polymers or, for oligomeric samples, 60/40(wt/wt) phenol/ tetrachloroethane with deuterated chloroform added for lock. Peak assignments for 2,2,4,4-tetramethyl-1,3-cyclobutanediol resonances were made by comparison to model mono- and dibenzoate esters of 2,2,4,4-tetramethyl-1,3-cyclobutanediol. These model compounds closely approximate the resonance positions found in the polymers and oligomers.

The melt viscosity was determined at 1 radian/second on a rotary melt rheometer at 290 °C.

### Comparison Example

A mixture of 77.68 kg of dimethyl terephthalate, 48.46 kg of 1,4-cyclohexanedimethanol, 20.77 kg of 2,2,4,4-tetramethyl-1,3-cyclobutanediol, and 0.046 kg of dibutyl tin oxide was placed in a 500-liter vessel equipped with an inlet for nitrogen, a metal stirrer, and a short distillation column. The vessel was heated to 210 °C. The stirring speed was set to 20 RPM throughout the experiment. The contents of the vessel were heated at 210 °C for 30 minutes and then the temperature was gradually increased to 260 °C over 120 minutes. The reaction mixture was held at 260 °C for 120 minutes and then heated up to 290 °C in 60 minutes. Once at 290 °C, vacuum was gradually applied over the next 10 minutes until the pressure inside the flask reached 100 mm of Hg and the stirring speed was also reduced to 10 RPM. The pressure inside the flask was further reduced to 0.3 mm of Hg over the next 5 minutes and the stirring speed was reduced to 5 RPM. A pressure of 0.3 mm of Hg was maintained for a total time of 60 minutes to remove excess unreacted diols. The resulting copolyester had an inherent viscosity of 0.44 dUg as determined in 60/40 (wt/wt) phenol/tetrachloroethane at a concentration of 0.25 g/50 ml at 25 °C.

### Example

The experiment from the Comparison Example was repeated with the difference that 1.0 g of a polydimethyl siloxane (Dow Corning 200) was added. The isolated polyester was clear and had an inherent viscosity of 0.65 dUg as determined in 60/40 (wt/wt) phenol/tetrachloroethane at a concentration of 0.25 g/50 ml at 25 °C.

## Claims

1. Process for making a polyester comprising:
heating a mixture comprising at least
(a) a dicarboxylic acid component comprising:
(i) terephthalic acid residues; and
(b) a glycol component;
wherein said heating is performed in the presence of a silicon-containing compound;
wherein the glycol component comprises:
(i) 2,2,4,4-tetramethyl-1,3-cyclobutanediol residues;
and wherein said silicon-containing compound is present in an amount of from 0.1 to 100 ppm based on the total weight of the polyester.

2. Process of claim 1, wherein the mixture comprises:
(a) a dicarboxylic acid component comprising:
(i) 70 to 100 mole % of terephthalic acid residues;
(ii) 0 to 30 mole % of aromatic dicarboxylic residues having up to 20 carbon atoms; and
(iii) 0 to 10 mole % of aliphatic dicarboxylic acid residues having up to 16 carbon atoms; and
(b) a glycol component comprising:
(i) 1 to 99 mole % of 2,2,4,4-tetramethyl-1,3-cyclobutanediol residues; and
(ii) 1 to 99 mole % cyclohexanedimethanol residues;
wherein the total amount of the dicarboxylic acid component is 100 mole %; and wherein the total mole % of the glycol component is 100 %.

3. Process of any one of the preceding claims, wherein said silicon-containing compound is present in an amount of from 0.1 to 50 ppm, or from 1 to 20 ppm.

4. Process of any one of the preceding claims, wherein the silicon-containing substance is selected from siloxanes and polysiloxanes.

5. Process of any one of the preceding claims, wherein said silicon-containing compound is added to the mixture prior to the heating or during the heating, or prior to the heating and during the heating.

6. Process of any one of the preceding claims, wherein the heating is carried out until the polyester has an inherent viscosity of from 0.35 to 1.20 dL/g as determined in 60/40 (wt/wt) phenol/tetrachloroethane at a concentration of 0.25 g/50 ml at 25 °C.

7. Process of any one of the preceding claims, wherein the mixture further comprises at least one compound of tin, titanium, gallium, zinc, antimony, cobalt, manganese, magnesium, germanium, lithium, aluminum compounds and an aluminum compound with lithium hydroxide or sodium hydroxide.

8. Process of any one of the preceding claims, wherein the mixture further comprises a phosphorus compound.

9. Process of any one of the preceding claims, wherein said mixture is heated at a temperature of from 150 °C to 250 °C under a relative pressure of from 0 mbar (0 psig) to 5175 mbar (75 psig), wherein the molar ratio of glycol component/dicarboxylic acid component is 1.0 to 1.5/1.0.

10. Process of claim 9, wherein the formed product is heated at a temperature of from 230 °C to 320 °C under a pressure chosen from the range of the final pressure of the preceding heating to an absolute pressure of 0.026 mbar (0.02 torr) to form a final polyester.

11. Process of any one of the preceding claims comprising stages (I) and (II):
(I) heating a mixture at a temperature of from 150 °C to 250 °C, under a relative pressure of from 0 mbar (0 psig) to 5175 mbar (75 psig), wherein said mixture comprises:
(a) a dicarboxylic acid component comprising:
(i) 70 to 100 mole % of terephthalic acid residues;
(ii) 0 to 30 mole % of aromatic dicarboxylic acid residues having up to 20 carbon atoms; and
(iii) 0 to 10 mole % of aliphatic dicarboxylic acid residues having up to 16 carbon atoms; and
(b) a glycol component comprising:
(i) 1 to 99 mole % of 2,2,4,4-tetramethyl-1,3-cyclobutanediol residues; and
(ii) 1 to 99 mole % of cyclohexanedimethanol residues;
wherein the molar ratio of glycol component/dicarboxylic acid component added in stage (I) is 1.0-1.5/1.0;
wherein the mixture in stage (I) is heated in the presence of at least one compound of tin, titanium, gallium, zinc, antimony, cobalt, manganese, magnesium, germanium, lithium, aluminum and an aluminum compound with lithium hydroxide or sodium hydroxide; and
(II) heating the product of stage (I) at a temperature of from 230 °C to 320 °C under a pressure chosen from the range of the final pressure of stage (I) to an absolute pressure of 0.026 mbar (0.02 torr), to form a final polyester;
wherein the total mole % of the dicarboxylic acid component of the final polyester is 100 mole %; and wherein the total mole % of the glycol component of the final polyester is 100 mole %; and wherein a phosphorus compound is added in stage (I) or stage (II).

12. Process of claim 11, wherein the silicon-containing compound is added in stage (I) or in stage (II) or in stage (I) and stage (II).

13. Polyester comprising:
(a) a dicarboxylic acid component comprising:
(i) terephthalic acid residues; and
(b) a glycol component; and
a silicon-containing compound;
wherein the glycol component comprises:
(i) 2,2,4,4-tetramethyl-1,3-cyclobutanediol residues;
and wherein said silicon-containing compound is present in an amount of from 0.1 to 100 ppm based on the total weight of the polyester.

14. Use of a silicon-containing compound in the manufacture of a polyester comprising:
(a) a dicarboxylic acid component comprising:
(i) terephthalic acid residues; and
(b) a glycol component;
for increasing the inherent viscosity of said polyester;
wherein the glycol component comprises:
(i) 2,2,4,4-tetramethyl-1,3-cyclobutanediol residues;
and wherein said silicon-containing compound is present in an amount of from 0.1 to 100 ppm based on the total weight of the polyester.

## Patentansprüche

1. Verfahren zur Herstellung eines Polyesters umfassend:
Erhitzen eines Gemischs umfassend mindestens
(a) eine Dicarbonsäurekomponente umfassend:
(i) Terephthalsäurereste; und
(b) eine Glykolkomponente;
wobei besagtes Erhitzen in Gegenwart einer Silizium-enthaltenden Verbindung durchgeführt wird;
wobei die Glykolkomponente umfasst:
(i) 2,2,4,4-Tetramethyl-1,3-cyclobutandiolreste;
und wobei besagte Silizium-enthaltende Verbindung in einer Menge von 0,1 bis 100 ppm vorhanden ist, bezogen auf das Gesamtgewicht des Polyesters.

2. Verfahren nach Anspruch 1, wobei das Gemisch umfasst:
(a) eine Dicarbonsäurekomponente umfassend:
(i) 70 bis 100 Mol-% Terephthalsäurereste;
(ii) 0 bis 30 Mol-% Reste aromatischer Dicarbonsäuren mit bis zu 20 Kohlenstoffatomen; und
(iii) 0 bis 100 Mol-% Reste aliphatischer Dicarbonsäuren mit bis zu 16 Kohlenstoffatomen; und
(b) eine Glykolkomponente umfassend:
(i) 1 bis 99 Mol-% 2,2,4,4-Tetramethyl-1,3-cyclobutandiolreste; und
(ii) 1 bis 99 Mol-% Cyclohexandimethanolreste;
wobei die Gesamtmenge der Dicarbonsäurekomponente 100 Mol-% beträgt; und wobei die gesamten Mol-% der Glykolkomponente 100 % betragen.

3. Verfahren nach einem der vorstehenden Ansprüche, wobei besagte Silizium-enthaltende Verbindung in einer Menge von 0,1 bis 50 ppm oder 1 bis 20 ppm vorhanden ist.

4. Verfahren nach einem der vorstehenden Ansprüche, wobei die Silizium-enthaltende Substanz ausgewählt ist aus Siloxanen und Polysiloxanen.

5. Verfahren nach einem der vorstehenden Ansprüche, wobei besagte Silizium-enthaltende Verbindung dem Gemisch vor dem Erhitzen oder während des Erhitzens oder vor dem Erhitzen und während des Erhitzens zugefügt wird.

6. Verfahren nach einem der vorstehenden Ansprüche, wobei das Erhitzen durchgeführt wird bis der Polyester eine inherente Viskosität von 0,35 bis 1,20 dL/g aufweist wie bestimmt in 60/40 (Gewicht/Gewicht) Phenol/Tetrachlorethan bei einer Konzentration von 0,25 g/50 ml bei 25 °C.

7. Verfahren nach einem der vorstehenden Ansprüche, wobei das Gemisch weiter mindestens eine Verbindung des Zinns, Titans, Galliums, Zinks, Antimons, Kobalts, Mangans, Magnesiums, Germaniums, Lithiums, Aluminiumverbindungen und eine Aluminiumverbindung mit Lithiumhydroxid oder Natriumhydroxid umfasst.

8. Verfahren nach einem der vorstehenden Ansprüche, wobei das Gemisch weiter eine Phosphorverbindung umfasst.

9. Verfahren nach einem der vorstehenden Ansprüche, wobei besagtes Gemisch bei einer Temperatur von 150 °C bis 250 °C unter einem relativen Druck von 0 mbar (0 psig) bis 5175 mbar (75 psig) erhitzt wird, wobei das molare Verhältnis der Glykolkomponente/Dicarbonsäurekomponente 1,0 - 1,5/1,0 beträgt.

10. Verfahren nach Anspruch 9, wobei das gebildete Produkt bei einer Temperatur von 230 °C bis 320 °C unter einem Druck erhitzt wird ausgewählt aus dem Bereich des letzten Drucks des vorausgehenden Erhitzens bis zu einem Absolutdruck von 0,026 mbar (0,02 torr), um einen finalen Polyester zu bilden.

11. Verfahren nach einem der vorstehenden Ansprüche umfassend Stufen (I) und (II):
(I) Erhitzen eines Gemischs auf eine Temperatur von 150 °C bis 250 °C unter einem relativen Druck von 0 mbar (0 psig) bis 5175 mbar (75 psig), wobei besagtes Gemisch umfasst:
(a) eine Dicarbonsäurekomponente umfassend:
(i) 70 bis 100 Mol-% Terephthalsäurereste;
(ii) 0 bis 30 Mol-% Reste einer aromatischen Dicarbonsäure mit bis zu 20 Kohlenstoffatomen; und
(iii) 0 bis 100 Mol-% Reste einer aliphatischen Dicarbonsäure mit bis zu 16 Kohlenstoffatomen; und
(b) eine Glykolkomponente umfassend:
(i) 1 bis 99 Mol-% 2,2,4,4-Tetramethyl-1,3-cyclobutandiolreste; und
(ii) 1 bis 99 Mol-% Cyclohexandimethanolreste;
wobei das molare Verhältnis der Glykolkomponente/Dicarbonsäurekomponente, welche in Stufe (I) hinzugefügt werden, 1,0 - 1,5/1,0 beträgt;
wobei das Gemisch in Stufe (I) in Gegenwart mindestens einer Verbindung des Zinns, Titans, Galliums, Zinks, Antimons, Kobalts, Mangans, Magnesiums, Germaniums, Lithiums, Aluminiums und einer Aluminiumverbindung mit Lithiumhydroxid oder Natriumhydroxid erhitzt wird; und
(II) Erhitzen des Produkts aus Stufe (I) auf eine Temperatur von 230 °C bis 320 °C unter einem Druck ausgewählt aus dem Bereich des finalen Drucks der Stufe (I) bis zu einem Absolutdruck von 0,026 mbar (0,02 torr), um einen finalen Polyester zu bilden;
wobei die gesamten Mol-% der Dicarbonsäurekomponente des finalen Polyesters 100 Mol-% betragen; und wobei die gesamten Mol-% der Glykolkomponente des finalen Polyesters 100 Mol-% betragen; und wobei eine Phosphorverbindung in Stufe (I) oder (II) hinzugefügt wird.

12. Verfahren nach Anspruch 11, wobei die Silizium-enthaltende Verbindung in Stufe (I) oder in Stufe (II) oder in Stufe (I) und Stufe (II) hinzugefügt wird.

13. Polyester umfassend:
(a) eine Dicarbonsäurekomponente umfassend.
(i) Terephthalsäurereste; und
(b) eine Glykolkomponente; und
eine Silizium-enthaltende Verbindung;
wobei die Glykolkomponente umfasst:
(i) 2,2,4,4-Tetramethyl-1,3-cyclobutandiolreste;
und wobei besagte Silizium-enthaltende Verbindung in einer Menge von 0,1 bis 100 ppm vorhanden ist, bezogen auf das Gesamtgewicht des Polyesters.

14. Verwendung einer Silizium-enthaltenden Verbindung bei der Herstellung eines Polyesters umfassend:
(a) eine Dicarbonsäurekomponente umfassend:
(i) Terephthalsäurereste; und
(b) eine Glykolkomponente;
zum Erhöhen der inherenten Viskosität des besagten Polyesters;
wobei die Glykolkomponente umfasst:
(i) 2,2,4,4-Tetramethyl-1,3-cyclobutandiolreste;
und wobei besagte Silizium-enthaltende Verbindung in einer Menge von 0,1 bis 100 ppm vorhanden ist, bezogen auf das Gesamtgewicht des Polyesters.

## Revendications

1. Procédé pour la fabrication d'un polyester comprenant :
le chauffage d'un mélange comprenant au moins
(a) un constituant acide dicarboxylique comprenant :
(i) des résidus d'acide téréphtalique ; et
(b) un constituant glycol ;
dans lequel ledit chauffage est réalisé en présence d'un composé contenant du silicium ;
dans lequel le constituant glycol comprend :
(i) des résidus de 2,2,4,4-tétraméthyl-1,3-cyclobutanediol ;
et dans lequel ledit composé contenant du silicium est présent dans une quantité de 0,1 à 100 ppm rapportée à la masse totale du polyester.

2. Procédé selon la revendication 1, dans lequel le mélange comprend :
(a) un constituant acide dicarboxylique comprenant :
(i) de 70 à 100 % en mol de résidus d'acide téréphtalique ;
(ii) de 0 à 30 % en mol de résidus d'acide dicarboxylique aromatique ayant jusqu'à 20 atomes de carbone ; et
(iii) de 0 à 10 % en mol de résidus d'acide dicarboxylique aliphatique ayant jusqu'à 16 atomes de carbone ; et
(b) un constituant glycol comprenant :
(i) de 1 à 99 % en mol de résidus de 2,2,4,4-tétraméthyl-1,3-cyclobutanediol ; et
(ii) de 1 à 99 % en mol de résidus de cyclohexanediméthanol ;
dans lequel la quantité totale du constituant d'acide dicarboxylique est de 100 % en mol ; et dans lequel le % en mol total du constituant glycol est de 100 %.

3. Procédé selon l'une quelconque des revendications précédentes, dans lequel ledit composé contenant du silicium est présent dans une quantité de 0,1 à 50 ppm, ou de 1 à 20 ppm.

4. Procédé selon l'une quelconque des revendications précédentes, dans lequel la substance contenant du silicium est choisie parmi des siloxanes et des polysiloxanes.

5. Procédé selon l'une quelconque des revendications précédentes, dans lequel ledit composé contenant du silicium est ajouté au mélange avant le chauffage ou pendant le chauffage, ou avant le chauffage et pendant le chauffage.

6. Procédé selon l'une quelconque des revendications précédentes, dans lequel le chauffage est réalisé jusqu'à ce que le polyester présente une viscosité inhérente de 0,35 à 1,20 dl/g comme déterminée dans 60/40 (poids/poids) de phénol/tétrachloroéthane à une concentration de 0,25 g/50 ml à 25°C.

7. Procédé selon l'une quelconque des revendications précédentes, dans lequel le mélange comprend de plus au moins un composé parmi des composés d'étain, de titane, de gallium, de zinc, d'antimoine, de cobalt, de manganèse, de magnésium, de germanium, de lithium, d'aluminium et un composé d'aluminium avec de l'hydroxyde de lithium ou de l'hydroxyde de sodium.

8. Procédé selon l'une quelconque des revendications précédentes, dans lequel le mélange comprend de plus un composé de phosphore.

9. Procédé selon l'une quelconque des revendications précédentes, dans lequel ledit mélange est chauffé à une température de 150°C à 250°C sous une pression relative de 0 mbar (0 psig) à 5 175 mbar (75 psig), dans lequel le rapport molaire du constituant glycol/constituant acide dicarboxylique est de 1,0 à 1,5/1,0.

10. Procédé selon la revendication 9, dans lequel le produit formé est chauffé à une température de 230°C à 320°C sous une pression choisie dans l'intervalle de la pression finale du chauffage précédent à une pression absolue de 0,026 mbar (0,02 torr) pour former un polyester final.

11. Procédé selon l'une quelconque des revendications précédentes comprenant les étapes (I) et (II) :
(I) de chauffage d'un mélange à une température de 150°C à 250°C, sous une pression relative de 0 mbar (0 psig) à 5 175 mbar (75 psig), dans lequel ledit mélange comprend :
(a) un constituant acide dicarboxylique comprenant :
(i) de 70 à 100 % en mol de résidus d'acide téréphtalique ;
(ii) de 0 à 30 % en mol de résidus d'acide dicarboxylique aromatique présentant jusqu'à 20 atomes de carbone ; et
(iii) de 0 à 10 % en mol de résidus d'acide dicarboxylique aliphatique ayant jusqu'à 16 atomes de carbone ; et
(b) un constituant glycol comprenant :
(i) de 1 à 99 % en mol de résidus de 2,2,4,4-tétraméthyl-1,3-cyclobutanediol ; et
(ii) de 1 à 99 % en mol de résidus de cyclohexanediméthanol ;
dans lequel le rapport molaire de constituant glycol/constituant acide dicarboxylique ajouté dans l'étape (I) est de 1,0-1,5/1,0 ;
dans lequel le mélange dans l'étape (I) est chauffé en présence d'au moins un composé parmi des composés d'étain, de titane, de gallium, de zinc, d'antimoine, de cobalt, de manganèse, de magnésium, de germanium, de lithium, d'aluminium et un composé d'aluminium avec de l'hydroxyde de lithium ou de l'hydroxyde de sodium ; et
(II) de chauffage du produit de l'étape (I) à une température de 230°C à 320°C sous une pression choisie dans l'intervalle de la pression finale de l'étape (I) à une pression absolue de 0,026 mbar (0,02 torr), pour former un polyester final ;
dans lequel le % en mol total du constituant acide dicarboxylique du polyester final est de 100 % en mol ; et dans lequel le % en mol total du constituant glycol du polyester final est de 100 % en mol ; et dans lequel un composé de phosphore est ajouté dans l'étape (I) ou l'étape (II)

12. Procédé selon la revendication 11, dans lequel le composé contenant du silicium est ajouté dans l'étape (I) ou dans l'étape (II) ou dans l'étape (I) et l'étape (II).

13. Polyester comprenant :
(a) un constituant acide dicarboxylique comprenant :
(i) des résidus d'acide téréphtalique ; et
(b) un constituant glycol ; et
un composé contenant du silicium ;
dans lequel le constituant glycol comprend :
(i) des résidus de 2,2,4,4-tétraméthyl-1,3-cyclobutanediol ;
et dans lequel ledit composé contenant du silicium est présent dans une quantité de 0,1 à 100 ppm rapporté à la masse totale du polyester.

14. Utilisation d'un composé contenant du silicium dans la fabrication d'un polyester comprenant :
(a) un constituant acide dicarboxylique comprenant :
(i) des résidus d'acide téréphtalique ; et
(b) un constituant glycol ;
pour augmenter la viscosité inhérente dudit polyester ;
dans laquelle le constituant glycol comprend
(i) des résidus de 2,2,4,4-tétraméthyl-1,3-cyclobutanediol ;
et dans laquelle ledit composé contenant du silicium est présent dans une quantité de 0,1 à 100 ppm rapportée à la masse totale du polyester.
